(19) Europäisches Patentamt
European Patent Office
Office européen des brevets

(11) **EP 2 562 682 B1**

(12) **EUROPÄISCHE PATENTSCHRIFT**

(45) Veröffentlichungstag und Bekanntmachung des Hinweises auf die Patenterteilung:
**08.10.2014 Patentblatt 2014/41**

(51) Int Cl.:
**G06K 9/00** (2006.01)

(21) Anmeldenummer: **11178705.7**

(22) Anmeldetag: **24.08.2011**

(54) **Verfahren und Vorrichtung zur Aufnahme eines Fingerabdruckes mit Echtheitserkennung**

Method and device for capture of a fingerprint with authenticity recognition

Procédé et dispositif de saisie d'une empreinte digitale avec détection d'authenticité

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**27.02.2013 Patentblatt 2013/09**

(73) Patentinhaber: **DERMALOG Identification Systems GmbH**
**20148 Hamburg (DE)**

(72) Erfinder:
• **Kulcke, Dr. Axel**
**18233 Pepelow (DE)**
• **Hengfoss, Clarissa**
**22305 Hamburg (DE)**
• **Mull, Günther**
**22085 Hamburg (DE)**

(74) Vertreter: **UEXKÜLL & STOLBERG**
**Patentanwälte**
**Beselerstrasse 4**
**22607 Hamburg (DE)**

(56) Entgegenhaltungen:
EP-A1- 2 309 422     WO-A1-2006/082550
US-A1- 2003 025 897     US-A1- 2005 271 258

• PISHVA D: "Spectroscopically Enhanced Method and System for Multi-Factor Biometric Authentication", IEICE TRANSACTIONS ON INFORMATION AND SYSTEMS, INFORMATION & SYSTEMS SOCIETY, TOKYO, JP, Bd. E91D, Nr. 5, 1. Mai 2008 (2008-05-01), Seiten 1369-1379, XP001553529, ISSN: 0916-8532, DOI: 10.1093/IETISY/E91-D.5.1369
• CLARISSA HENGFOSS ET AL: "Dynamic liveness and forgeries detection of the finger surface on the basis of spectroscopy in the 400-1650nm region", FORENSIC SCIENCE INTERNATIONAL, Bd. 212, Nr. 1-3, 5. Juli 2011 (2011-07-05), Seiten 61-68, XP55019204, ISSN: 0379-0738, DOI: 10.1016/j.forsciint.2011.05.014

EP 2 562 682 B1

## Beschreibung

Die vorliegende Erfindung betrifft ein Verfahren und eine Vorrichtung zur Aufnahme eines Fingerabdruckes mit Echtheitserkennung, unter Verwendung einer an ein Datenverarbeitungsgerät angeschlossenen Fingerabdruck-Aufnahmeeinheit, die ein Prisma mit einer Auflagefläche, eine Beleuchtungseinheit zur Beleuchtung eines auf die Auflagefläche aufgelegten Fingers und einen ersten Kamerasensor aufweist, die so aufgebaut und angeordnet sind, dass der Kamerasensor ein Fingerabdruckbild entweder nach dem Prinzip der gestörten Totalreflexion (FTIR) oder nach dem Prinzip der Totalreflexion (TIR) aufnehmen kann.

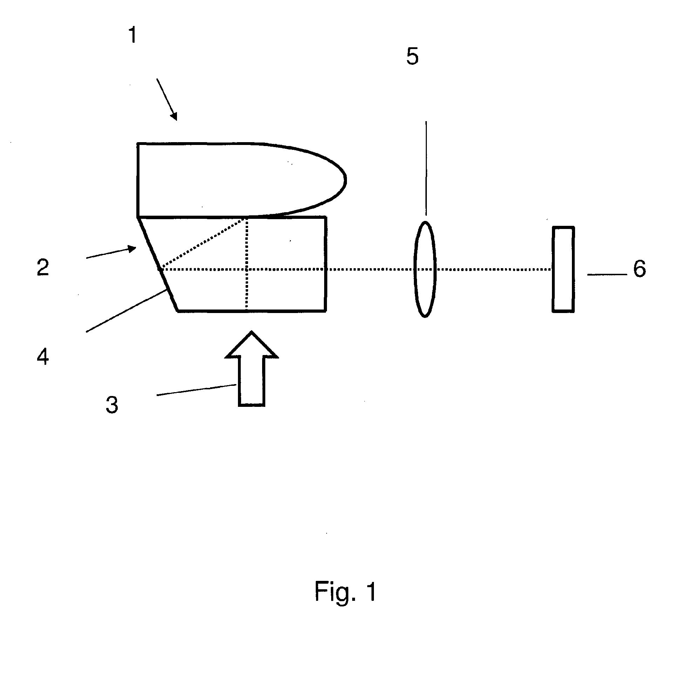

Ein derartiges Verfahren ist z.B. aus EP 2 120 182 bekannt, das nach dem FTIR-Prinzip im Dunkelfeld arbeitet. Fingerabdruck-Aufnahmeeinheiten weisen typischerweise einen durchsichtigen Prismenkörper auf, auf dessen obere Oberfläche der Finger zur Aufnahme aufzulegen ist. Der Prismenkörper ist typischerweise ein Glaskörper. Eine Beleuchtungseinheit ist so angeordnet, um den auf den Prismenkörper aufgelegten Finger durch den Prismenkörper hindurch zu beleuchten. Ein zweidimensionaler ortsempfindlicher Sensor, also ein Kamerasensor, ist so angeordnet, um von dem aufgelegten Finger reflektiertes Licht, das durch den Prismenkörper hindurch zurückgeworfen wird, aufzunehmen. Solche Fingerabdruck-Aufnahmeeinheiten machen sich den Unterschied der Brechungsindizes einerseits zwischen dem Prismenkörper und darauf aufliegenden Hautbereichen und andererseits zwischen Prismenkörper und Luft, in den zwischen benachbarten Hautleisten liegenden Tälern, zunutze. Das auf die Grenzfläche zwischen Prismenkörper 2, wie schematisch in Figur 1 dargestellt, und umgebender Luft bzw. Fingeroberfläche auftreffende Licht wird mittels diffuser Streuung in einigen Bereichen, nämlich in den Bereichen der Hautleisten, gestreut und fällt auf eine abgeschrägte, verspiegelte Seite 4 des Prismenkörpers. Dort, wo keine Hautleiste aufliegt, verlassen die Lichtstrahlen das Prisma im Wesentlichen in senkrechter Richtung und treffen nicht auf die verspiegelte Seite 4. Dadurch erscheinen die Zwischenräume der Hautleisten im Reflexionsbild als schwarz; man bezeichnet dieses Verfahren daher als FTIR-Aufnahme im Dunkelfeld. Durch die Außenseite des Prismas eindringende Lichtstrahlen können dieses Verfahren nicht stören, da diese in einem derart flachen Winkel auf die Oberfläche fallen müssten, um über die abgeschrägte Seite 4 auf den Kamerasensor abgebildet zu werden, dass die Bedingung für Totalreflexion erfüllt wäre und diese nicht in das Prisma eindringen könnten. Grundsätzlich sind Fingerabdruckaufnahmen nach dem FTIR-Prinzip auch in Hellfeldmessung möglich, wenn die Beleuchtungseinheit Licht unter einem kleineren Winkel als dem kritischen Winkel einstrahlt und der Kamerasensor unter dem gleichen Winkel auf der gegenüberliegenden Seite des Prismenkörpers auf die Auflagefläche gerichtet ist. Dann tritt in den Bereichen der Täler zwischen Hautleisten Totalreflexion auf und im Bereich der Leisten nur diffuse Streuung, so dass in dem vom Kamerasensor aufgenommenen Fingerabdruckbild die Hautleisten dunkel und die dazwischenliegenden Täler hell erscheinen.

Ein Verfahren, das nach dem TIR-Prinzip zur Aufnahme des Fingerabdruckbildes arbeitet, ist z.B. aus US 2011/0163163 A1 bekannt.

Es kommt für die vorliegende Erfindung aber lediglich darauf an, dass ein kontrastreiches Fingerabdruckbild aufgenommen wird, das den sicherheitstechnischen Anforderungen an Auflösung, Kontrast etc. genügt, aber nicht darauf, ob die Messung nach dem TIR- oder FTIR-Prinzip und ob im Hellfeld oder im Dunkelfeld realisiert wird. In der Beschreibung des bevorzugten Ausführungsbeispiels der vorliegenden Erfindung wird diese auf eine Fingerabdruckaufnahme im Dunkelfeld nach dem FTIR-Prinzip angewendet.

Die oben beschriebenen Bildaufnahmetechniken werden heute vorwiegend mit optischen Ein- oder Vierfinger-Scannern umgesetzt. Für eine hohe Bildqualität (hohe Auflösung, starker Kontrast und Verzerrungsfreiheit) haben sich digitale Kamerasysteme durchgesetzt. Die Auflagefläche wird wie oben beschrieben durch die Oberseite eines Prismenkörpers bereitgestellt. Solche Fingerabdruckaufnahmeverfahren werden zur biometrischen Identifizierung von Person zum Beispiel bei der Zugangskontrolle zu Gebäuden oder Räumen oder bei anderweitiger Überprüfung einer Berechtigung einer Person eingesetzt.

Zur Personenidentifikation hat sich im Bereich der Biometrietechnik der Aufnahme und Auswertung von Fingerabdruckbildern bewährt, nämlich die Aufnahme und Auswertung der Minutien der Papillarleisten von Fingerabdrücken. Die dafür benötigten Datenbanksysteme werden im Allgemeinen als AFIS-Systeme (automatic fingerprint identification systems) bezeichnet. Die Auswerteverfahren für die Fingerabdrücke über die Minutien sind gut bekannt und werden auch in sehr großen Datenbanksystemen (mehr als 10 Mio. gespeicherte Fingerabdrücke) angewendet. Die Auswertung läuft auch bei großen Datenmengen schnell und zuverlässig. Es gibt eine Reihe von Verfahren, mit dem die so aufgenommenen Fingerabdruckbilder dann ausgewertet und mit vorhandenen bekannten Datensätzen zur Identifizierung verglichen werden können, wie etwa in EP 1 498 837 A1 beschrieben.

Neben der qualitativ guten Aufnahme des Fingerabdruckbildes, das zur Identifizierung verwendet werden soll, ist es bei sicherheitsrelevanten Anwendungen von wesentlicher Bedeutung, dass die Echtheit des aufgelegten Fingers festgestellt wird, d.h. festgestellt wird, ob ein echter Finger aufliegt oder ob es sich um einen Täuschungsversuch (oder ein Falsifikat) handelt. Als zukünftiges Beispiel für hohe Anforderungen für die sichere Echtheitserkennung von Fingerabdruckbildern wird die biometrische Identifikation anhand eines Fingerabdruckbildes an Geldautomaten zur Identifikation des berechtigten Kunden genannt. Hier ist es so, dass diese Fingerabdruckidentifikation eine Echtheitserkennung benötigt, da sonst zu befürchten wäre, dass Kunden geschädigt oder gefährdet werden, indem gegen ihren Willen ihr Fingerabdruck verwendet wird. Weiterhin muss die Echtheitserkennung in sehr kurzer Zeit abgeschlossen sein. Wünschenswert sind hier Zeiten unter 1 s und akzeptabel erscheinen Zeiten bis zu 5 s.

Die Fälschungs- oder Täuschungsarten bei Fingerabdruckaufnahmegeräten lassen sich in drei Gruppen einteilen:

(1) Nachbildung von Fingerabdrücken auf einem Kunststoffkörper oder semiflexiblem Materialkörper. Dieser kann Stempelform, die Form eines nachgemachten Fingers oder einer imitierten Hand haben (im Nachfolgenden zusammenfassend "Stempelpolymer").

(2) Einsatz von dünnen Kunststofffolienüberzügen über einem echten Finger, wobei hier auch transparente Folienüberzeuge verwendet werden können; eine besondere, in diese Gruppe fallende Technik ist die sogenannte Holzleim-Methode (im Nachfolgenden zusammenfassend als "Folienüberzüge" bezeichnet).

(3) Verwendung eines realen Fingers, wobei davon auszugehen ist, dass der Finger von der Person abgetrennt ist oder die Person nicht mehr lebt (im Nachfolgenden zusammenfassend "Leichenfinger").

In der oben genannten Veröffentlichung EP 2 120 182 A1 sind eine Reihe von spektroskopischen Untersuchungen beschrieben, die zur Echtheitserkennung bzw. zur Zurückweisung von Falsifikaten beitragen sollen, zum Beispiel der Nachweis von spektralen Eigenschaften, die charakteristisch für oxygeniertes Hämoglobin sind.

Die oben genannten verschiedenen Falsifikate zur Auflage auf einem Fingerabdruckscanner können ein einwandfreies Fingerabdruckbild liefern; sie unterscheiden sich aber in ihren optischen Eigenschaften, so dass viele Falsifikate erkannt und zurückgewiesen werden können. Andererseits hat sich auch herausgestellt, dass bei vielen bekannten Fingerabdrucksscannern gleichwohl Täuschungen möglich sind (siehe zum Beispiel "Risk Evaluation of Spoofing against a Sensor Supplied with Liveness Detection", von Marcela Espinoza und Christopher Champod, Forensic Science International 204 (2011), 162-168).

Bei den nach dem Stand der Technik arbeitenden Fingerabdruckaufnahmeverfahren konnte akzeptiert werden, dass in einer Minderheit der Fälle auch echte Fingerabdrücke als kritisch oder Fälschung eingestuft wurden und eine manuelle Nachkontrolle stattfand oder der Fingerabdruck als unecht abgelehnt wurde, obwohl ein echter Finger aufgenommen wurde. Bei Systemen wie Geldautomaten ist eine solche, wenn auch geringe Fehlerrate nicht akzeptabel.

Es hat sich herausgestellt, dass insbesondere Folienüberzüge noch nicht mit ausreichender Sicherheit zurückgewiesen werden können.

Es ist daher Aufgabe der vorliegenden Erfindung, ein Verfahren und eine Vorrichtung anzugeben, mit denen ein Fingerabdruckbild aufgenommen werden kann und die eine verbesserte Echtheitserkennung oder Zurückweisung von Fälschungen ermöglichen.

Zur Lösung diese Aufgabe dienen das Verfahren mit den Merkmalen des Patentanspruchs 1 sowie die Vorrichtung mit den Merkmalen des Anspruchs 10. Vorteilhafte Ausführungsformen der Erfindung sind jeweils in den Unteransprüchen aufgeführt.

Gemäß der vorliegenden Erfindung wird ein Spektrometer verwendet, das eine in eine erste Richtung verlaufende, schlitzförmige Blende aufweist, die nur einen schlitzförmigen Bereich des von dem auf der Auflagefläche aufliegenden Finger reflektierten Lichts hindurchtreten lässt. Dabei ist das Spektrometer so ausgestaltet, dass es eine spektrale Auffächerung in einer zweiten, von der ersten Richtung verschiedenen Richtung bewirkt, vorzugsweise in einer zweiten, zur ersten senkrechten Richtung. Auf diese Weise kann mit einem zweiten Kamerasensor eine Vielzahl von Spektren, entsprechend einer Vielzahl von aufeinanderfolgenden Bildelementen entlang der Blende, denen Ortsdaten entlang der ersten Richtung der Blende zugeordnet werden, aufgenommen werden. In dem aufgenommenen Fingerabdruckbild des ersten Kamerasensors wird ein entsprechender Bereich ausgeblendet, der dem durch die Blende des Spektrometers ausgeblendeten Bereich des Fingers entspricht. In diesem ausgeblendeten Bereich des Fingerabdruckbildes werden Hautleisten und dazwischenliegende Täler identifiziert und deren Ortsdaten entlang der ersten Richtung der Blende bestimmt. Die Ortsdaten der Leisten und Täler aus dem Fingerabdruckbild werden nun dazu verwendet, um sämtliche Spektren, die mit Leisten auf dem Fingerabdruckbild übereinstimmende Ortsdaten haben, zu einem einzigen Leistenspektrum zusammenzufassen und die Spektren, deren Ortsdaten mit Ortsdaten von Tälern in dem Fingerabdruckbild übereinstimmen, zu einem einzigen Tälerspektrum zusammenzufassen. Die zusammengefassten Spektren werden auf eine gleiche Gesamtintensität normiert und das normierte Leisenspektrum von dem normierten Tälerspektrum subtrahiert, um ein Differenzspektrum zu bilden. Schließlich wird das Differenzspektrum auf Merkmale für das Vorhandensein von körperfremden Überzugsmaterialien untersucht und bei deren Vorhandensein die Echtheit des Fingerabdrucks verneint.

Die vorliegende Erfindung dient insbesondere zum Auffinden von Überzügen über Fingern, die mit einer Profilierung mit Leisten und Tälern eines gewünschten, artifiziellen Fingerabdrucks versehen sind. Dem Verfahren liegt folgendes Auswertungsprinzip zugrunde. Bei einem Überzug mit einem künstlichen Fingerabdruck darauf werden die Positionen und Abstände von Hautleisten auf dem künstlichen Fingerabdruck in aller Regel keinerlei Bezug zu den Positionen und Abständen der echten Hautleisten des darunterliegenden Fingers haben. Nach dem vorliegenden Verfahren werden nun in dem Fingerabdruckbild Leisten und Täler und deren Ortsdaten bestimmt, d.h. die Ortsdaten von Leisten und Tälern des künstlichen Fingerabdrucks auf dem Überzug, der für das Fingerabdruckbild verantwortlich ist. Diese Leistenpositionen und Tälerpositionen werden nun verwendet, um die Vielzahl von Spektren demgemäß in "Leistenspektren" und "Tälerspektren" einzuteilen. Da bei einem Finger mit einem Überzug mit künstlichem Fingerabdruck die Positionen der Leisten und Täler des künstlichen Fingerabdrucks nichts mit den tatsächlichen Leisten und Tälern des dahinterliegenden echten Fingerabdrucks zu tun haben, wird bei der Zusammenfassung zu einem einzigen "Leistenspektrum" und einem einzigen "Tälerspektrum" eine vollständige Mittelung über tatsächliche Täler und Leisten durchgeführt, so dass bei einer Differenzbildung kein Unterschied mehr erkennbar sein sollte. Bei einem Finger mit Überzug mit gefälschtem Fingerabdruck unterscheiden sich die Spektren von Leisten und Tälern (im gefälschtem Fingerabdruckbild) nur dadurch, dass im Bereich der Leisten des Fingerabdruckbildes das zusätzliche Material der Hautleisten des gefälschten Fingerabdrucks vorhanden ist, während zwischen zwei Leisten des künstlichen Fingerabdrucks ein Tal ohne das Leistenmaterial des künstlichen Fingerabdrucks liegt. Bildet man nun das Differenzspektrum aus Leistenspektrum und Tälerspektrum (die durch die Leisten und Täler des künstlichen Fingerabdrucks auf dem Überzug definiert sind), so wird die Differenz genau durch das zusätzliche Leistenmaterial des künstlichen Fingerabdrucks verursacht. Mithin enthält das Differenzspektrum gerade die spektrale Information über das Leistenmaterial des künstlichen Fingerabdrucks des Überzugs. Besteht der Überzug mit dem darauf gebildeten künstlichen Fingerabdruck zum Beispiel aus Silikon, so zeigt das Differenzspektrum im Wesentlichen ein Silikonspektrum.

Da es sich bei künstlichen Überzugsmaterialen um elastische Materialien insbesondere aus Polymermaterial handeln muss, kann in dem Differenzspektrum nach charakteristischen Eigenschaften für O-H-, O-H und N-H-Gruppen gesucht werden und bei deren Vorhandensein auf einen Folienüberzug geschlossen und die Echtheit des Fingerabdrucks verneint werden.

Zur Identifizierung von körperfremden Materialien wird vorzugsweise bei einer Belichtung des auf der Auflagefläche aufliegenden Fingers im NIR-Bereich von 800 - 1.000 nm vorgenommen und eine Vielzahl von Spektren in diesem Wellenlängenbereich aufgenommen, da hier eine besonders gute Identifizierung von körperfremden Materialien möglich ist.

Es kann darüber hinaus eine Vielzahl von Spektren in sichtbarem VIS-Bereich von 500 - 850 nm aufgenommen werden. Diese Spektren aus dem VIS-Bereich können z.B. auf das Vorhandensein von Hämoglobin und dessen Grad der Oxygenierung auf vorgegebene Kriterien hin untersucht werden und bei Nichterfüllung die Echtheit des Fingerabdrucks verneint werden.

Die Spektren aus dem NIR-Bereich können ferner auf den Anteil von Wasser und Fett hin untersucht werden und die Echtheit des Fingerabdrucks verneint werden, wenn diese außerhalb vorgegebener Bereiche liegen. Die Vielzahl der aufgenommenen Spektren, mit ihrer Ortsabhängigkeit entlang der ersten Richtung der Blende, kann auch dazu verwendet werden, um in den Spektren die Positionen von Leisten und Tälern zu bestimmen. Die Ortsdaten der Leisten und Täler aus den Spektren können dann mit den Ortsdaten der Leisten und Täler aus dem Fingerabdruckbild verglichen werden und auf Übereinstimmung hin überprüft werden. Falls ein Folienüberzug vorhanden ist, werden dessen Leisten und Täler in aller Regel vollkommen unkorreliert zu den echten Leisten und Tälern unterhalb des Überzugs sein, während bei einem echten Finger ohne Überzug eine vollständige Korrelation gegeben ist, so dass eine sehr gute Diskriminierung zwischen echten Fingern und Fingern mit einem Überzug mit künstlichem Fingerabdruck möglich ist.

Vorzugsweise werden die Spektren in Form ihrer zweiten Ableitungen verwendet. Die zweite Ableitung stellt die Steigungsänderungen der Spektren dar. Daraus folgt, dass diese Kurven unabhängig von konstanten oder linearen Absorptionseigenschaften sind. Somit sind die Kurven weitestgehend unabhängig von Geräteschwankungen und Streueigenschaften des Gewebes. Die signifikanten chemisch bedingten Absorptionsbanden bleiben allerdings transformiert erhalten, und es sind die chemischen Eigenschaften sehr viel signifikanter in den spektroskopischen Daten zu erkennen und auszuwerten.

Gemäß einem weiteren Aspekt stellt die vorliegende Erfindung eine Vorrichtung zur Aufnahme eines Fingerabdruckes mit Echtheitserkennung mit einer an ein Datenverarbeitungsgerät angeschlossenen Fingerabdruck-Aufnahmeeinheit bereit, die einen Prismenkörper mit einer Auflagefläche, eine Beleuchtungseinheit zur Beleuchtung eines auf die Auflagefläche aufgelegten Fingers und einen ersten Kamerasensor aufweist, die so aufgebaut und angeordnet sind, dass der Kamerasensor ein Fingerabdruckbild entweder nach dem Prinzip der gestörten Totalreflexion (FTIR) oder nach dem Prinzip der Totalreflexion (TIR) aufnehmen kann. Ferner ist ein Spektrometer vorgesehen, das eine entlang einer ersten Richtung verlaufende schlitzförmige Blende zur Ausblendung eines schlitzförmigen Bereichs des von dem auf der Auflagefläche aufliegenden Finger reflektierten Lichts aufweist. Das Spektrometer ist weiter dazu ausgestaltet, durch die schlitzförmige Blende hindurchtretendes Licht spektral in einer zweiten Richtung aufzufächern, die von der ersten Richtung verschieden ist, vorzugsweise senkrecht dazu steht. So wird eine Vielzahl von Spektren, die in einer ersten Richtung aufeinanderfolgenden Bildelementen der Blende entsprechen und in der zweiten Richtung jeweils die spektrale Auffächerung eines Bildelements darstellen, gebildet. Diese zweidimensionale Spektrenfolge wird von dem zweiten Kamerasensor aufgenommen. Das mit dem zweiten Kamerasensor verbundene Datenverarbeitungsgerät ist dazu eingerichtet, die Vielzahl von Spektren jeweils mit zugeordneten Ortdaten entlang der ersten Richtung der Blende zu speichern. Das Datenverarbeitungsgerät ist ferner dazu eingerichtet, in dem aufgenommenen Fingerabdruckbild denjenigen Bereich auszublenden, der der Blende des Spektrometers entspricht, d.h. es wird durch Ausblenden in den Fingerabdruckbilddaten die Situation simuliert, dass vor dem ersten Kamerasensor auch eine entsprechende Blende angeordnet ist, die nur Licht aus genau demselben streifenförmigen Hautbereich passieren lässt, der auch in das Spektrometer eintritt und anschließend von dem zweiten Kamerasensor aufgenommen wird. Auf diese Weise können Ortsdaten entlang der ersten Richtung der Blende sowohl in den Spektren als auch in dem spaltförmig ausgeblendeten Bereich des Fingerabdruckbildes festgelegt werden, wobei diese Ortsdaten sich dann auf dieselben Orte an der Fingeroberfläche beziehen.

Das Datenverarbeitungsgerät ist weiter dazu eingerichtet, in dem ausgeblendeten Bereich des Fingerabdruckbildes Hautleisten und dazwischenliegende Täler zu identifizieren und deren Ortsdaten entlang der ersten Richtung der Blende zu bestimmen. Das Datenverarbeitungsgerät ist ferner dazu eingerichtet, aus der Vielzahl von Spektren nach deren Ortsdaten solche auszuwählen, die Ortsdaten haben, die den Ortsdaten von Leisten im Fingerabdruckbild entsprechen, und diese Spektren zu einem einzigen Leistenspektrum zusammenzufassen. Ferner werden diejenigen Spektren, deren Ortsdaten mit Ortsdaten von Tälern im Fingerabdruckbild übereinstimmen, zu einem einzigen Tälerspektrum zusammengefasst. Anschließend werden das Leistenspektrum und das Tälerspektrum in dem Datenverarbeitungsgerät auf gleiche Gesamtintensität normiert und diese normierten Spektren voneinander zur Bildung eines Differenzspektrums abgezogen. Schließlich ist das Datenverarbeitungsgerät dazu eingerichtet, in dem Differenzspektrum nach Merkmalen für das Vorhandensein von körperfremden Materialien zu suchen und bei Erfüllung von Merkmalen von körperfremden Materialien die Echtheit des Fingerabdrucks zu verneinen.

Vorzugsweise ist die Beleuchtungseinheit unterhalb des Prismenkörpers zur Einstrahlung von Licht von unten durch den Prismenkörper zu dem auf der Auflagefläche aufgelegten Finger angeordnet. Das Spektrometer ist so angeordnet, um mit seiner Blende Licht, das von dem Finger im Wesentlichen senkrecht zur Auflagefläche nach unten reflektiert wird, aufzunehmen. Als "reflektiert" wird in dieser Anmeldung alles Licht bezeichnet, dass von der Fingeroberfläche in den Prismenkörper eintritt, d.h. neben dem im strengen Sinne reflektierten Licht auch Licht, das nach Eintritt in den Finger durch Streuung wieder zurückgeworfen wird, was gelegentlich als Transflexion oder Remission bezeichnet wird.

Das Spektrometer weist ferner ein Blaze-Gitter auf, das so aufgebaut und angeordnet ist, dass die dispersive Auffächerung durch die Blende hindurchtretenden Lichts in einer von der Längsrichtung der Blende verschiedenen Richtung, vorzugsweise senkrecht dazu, erfolgt, wobei der zweite Kamerasensor so aufgebaut und angeordnet ist, dass er ein Beugungsbild des Blaze-Gitters mit der ersten Richtung der Blende und der dispersiven Spektralauffächerung des Lichts in einer von der ersten verschiedenen zweiten Richtung auf seiner Kamerasensorfläche aufnimmt.

Das Spektrometer ist also als zweidimensionales Spektrometer in folgender Weise aufgebaut: Es hat eine schlitz- oder spaltförmige Blende zur Ausblendung eines schlitzförmigen Bereichs des von dem auf der Auflagefläche aufliegenden Finger reflektierten und wieder ausgetretenen Lichts der Lichtquelle. Ferner ist in dem Spektrometer ein Gitter vorgesehen, das so aufgebaut und angeordnet ist, dass die durch die Beugung am Gitter bewirkte dispersive Auffächerung des durch die Blende hindurchtretenden Lichts in einer von der Längsrichtung der Blende verschiedenen, vorzugsweise senkrecht dazu liegenden, zweiten Richtung erfolgt. Von dem Gitter gebeugtes Licht wird auf den zweiten Kamerasensor geworfen, der so aufgebaut und angeordnet ist, dass er ein Beugungsbild des Gitters mit der Längsrichtung der Blende in der ersten Richtung und der dispersiven spektralen Auffächerung des Lichts in einer von der ersten verschiedenen zweiten Richtung auf seiner Kamerasensoroberfläche aufnimmt. Der zweite Kamerasensor ist mit dem Datenverarbeitungsgerät verbunden, das weiter dazu eingerichtet ist, die von dem zweiten Kamerasensor empfangenen Signale als eine Vielzahl von Spektren entsprechend einer Vielzahl von aufeinanderfolgenden Bildelementen entlang der Längsrichtung der Blende aufzunehmen. D.h. das Beugungsbild der Blende liegt zum Beispiel so auf dem Kamerasensor, dass die Längsausdehnung der Blende in der ersten Richtung der Y-Richtung entspricht und die dispersive Auffächerung in X-Richtung senkrecht dazu erfolgt. Dann entspricht jede Zeile des Kamerasensors einem Bildelement des durch die Blende hindurchtretenden Lichts, dessen Spektrum in X-Richtung entlang einer Zeile des Kamerasensors verläuft. Jede Zeile bildet dann ein unabhängig gemessenes Spektrum eines Bildelements entlang der ersten Richtung der Blende. Die Auflageposition des Fingers auf der Auflagefläche und die Stellung der Blende dazu sind vorzugsweise so ausgerichtet, dass die Blende mit ihrer ersten Richtung zu der Mehrzahl von Hautleisten und Tälern senkrecht steht, d.h. die Hautleisten schneidet, so dass eine Abfolge von Hautleisten und Tälern in Längsrichtung der Blende erfolgt.

Unter dem Begriff Blende sollen hier alle optischen Mittel verstanden werden, die einen langgestreckten streifenförmigen Bereich von dem auf der Auflagefläche aufliegenden Finger reflektierten und austretendem Licht ausblenden.

Das Spektrometer kann beispielsweise drei Objektive aufweisen. Als Objektive werden hier alle abbildenden optischen Einheiten bezeichnet. Es kann sich dabei also auch zum Beispiel um Achromate oder einfache Linsen handeln. In der Praxis sind kleine, günstige und hochwertige Megapixelobjektive im S-Mount-Standard vorhanden, die sehr gute Ergebnisse liefern. Das erste Objektiv erzeugt eine normale zweidimensionale Abbildung des von dem auf der Auflagefläche aufliegenden Finger stammenden Lichts (Objekt). In der Bildebene des ersten Objektivs ist die spaltförmige Blende angeordnet. Die spaltförmige Blende lässt einen zum Beispiel 20 μm breiten Streifen aus dem Bild hindurchtreten. Das zweite Objektiv bildet die spaltförmige Blende ins Unendliche ab. Hinter dem zweiten Objektiv liegt das Gitter, das eine dispersive Aufspaltung des Lichts z.B. in Richtung senkrecht zur Längsausdehnung der spaltförmigen Blende bewirkt. Das letzte Objektiv macht wieder die Abbildung vom Unendlichen auf das reale Bild, welches nun aber durch das dazwischenliegende Gitter spektral aufgefächert ist. In einer bevorzugten Ausführungsform ist das Gitter des Spektrometers ein transmissives Blaze-Gitter, das dazu optimiert ist, das dispergierte Licht für einen gegebenen Wellenlängenbereich in einen vorgegebenen Winkelbereich konzentriert abzugeben. Klassische Gitter haben den Nachteil, dass das Licht einer bestimmten Wellenlänge hauptsächlich in die nullte Ordnung und der Rest in höhere Ordnung verteilt wird, was einen Verlust an Helligkeit und damit Empfindlichkeit in jeder einzelnen Ordnung mit sich bringt. Dieser Nachteil wird durch die sogenannten Blaze-Gitter überwunden. Blaze-Gitter sind dazu optimiert, das Licht nur in eine bestimmte Richtung und somit bei gegebener Wellenlänge hauptsächlich in eine bestimmte Ordnung zu beugen. Dadurch kann ein Kamerasensor in dem optimierten Winkelbereich positioniert werden und braucht dort nur einen relativ kleinen Raumwinkelbereich zu überdecken. Zu den ersten Blaze-Gittern gehörten zum Beispiel Reflexionsgitter mit asymmetrisch sägezahnförmigen Oberflächengestaltungen, wobei die Sägezahnflanken als einzelne Spiegel jeweils so ausgerichtet werden, dass das Licht in Richtung der gewünschten Beugungsordnung reflektiert wurde. Danach wurden auch holographische Gitter entwickelt, die den gleichen Effekt wie die zuerst beschriebenen Blaze-Gitter haben. Weitere Typen von Blaze-Gittern sind die später entwickelten sogenannten VPH-Gitter (volume phase holographic gratings). VPH-Gitter sind Transmissionsgitter, bei denen ein transparentes Transmissionsgitter zwischen zwei Glas- oder Kunststoffscheiben eingeschlossen ist. In dem transparenten Material ist ein gewünschtes Muster eines variierenden Brechungsindex erzeugt, zum Beispiel durch holographische Belichtung und dadurch erfolgende Strukturänderung des Materials. Ein Beispiel für ein solches Blaze-Gitter findet sich in dem Artikel "Volume-phase holographic gratings and the effiency of three simple volume-phase holographic gratings", Samual C.

Barden et al., Publications of the Astronomical Society of the Pacific, Vol. 112, Seiten 809-820 Juni 2000. Mit solchen Blaze-Gittern lässt sich ein hoher Prozentsatz des gebeugten Lichts für den interessierenden Wellenlängenbereich in einen bestimmten Winkelbereich konzentrieren. Damit kann mit einem relativ kleinen Kamerasensor ein großer Anteil des Beugungsspektrums erfasst werden. Mit typischen Blaze-Gittern lassen sich ohne weiteres hohe Anteile von über 60% der Beugungsintensität in einem kleinen vorgegebenen Winkelbereich konzentrieren.

Die Beleuchtungseinheit ist vorzugsweise für unterschiedliche Beleuchtungssituationen vorbereitet. Für die Fingerabdruckaufnahme sollte eine Beleuchtungseinheit für eine flächige homogene Beleuchtung sorgen und vorzugsweise auch schnell schaltbar sein. Der Spektralbereich sollte typisch im Bereich von 650 nm - 850 nm liegen und eher schmalbandig (Halbwärtsbreite der LEDs typisch 30 nm) sein (eine schmalbandige Beleuchtung erzeugt bei realen Objektiven eine schärfere Abbildung). Unter diesen Bedingungen kommt zum Beispiel eine LED-Beleuchtungseinheit in Betracht.

Die Beleuchtungseinheit sollte für das ortsauflösende Spektrometer Licht in den Finger so einkoppeln, dass folgende Randbedingungen erfüllt sind:

    1. Das Licht sollte mit einem großen Öffnungswinkel die Beleuchtungseinheit verlassen, damit eine homogene diffuse Beleuchtung der auf der Auflagefläche aufliegenden Fingeroberfläche ermöglicht wird und spiegelnde Reflexionen weitgehend vermieden werden.

    2. Das Licht sollte spektral homogen über den zu analysierenden Wellenlängenbereich verteilt sein. Eine solche Beleuchtung kann mittels Halogenlampen (thermische Strahler), mittels einer kombinierten Beleuchtungseinheit aus unterschiedlichen breitbandigen LEDs oder OLEDs realisiert sein oder kann mittels einer Beleuchtungseinheit mit LEDs anderer Wellenlänge erzeugt werden, die mit einem Fluoreszenzfarbstoff oder einer Mischung mehrerer Fluoreszenz-Farbstoffe versehen sind, die in den geforderten Spektralbereich von 500 nm - 850 nm und 800 nm - 1.000 nm eine breitbandige Emission erzeugen. Die letztere Verfahrensweise ist vergleichbar mit üblichen Weißlicht-LEDs, bei denen eine blaue LED einen Fluoreszenzfarbstoff anregt, der breitbandig im Spektralbereich grün-gelb-rot (500 nm - 650 nm) leuchtet, so dass die Überlagerung eine im Wesentlichen homogene spektrale Verteilung ergibt.

Die Beleuchtung zur Fingerabdruckbildaufnahme und die Beleuchtung zur Spektralmessung können zeitlich voneinander getrennt aktiviert werden, zum Beispiel schnell aufeinanderfolgend.

Die Erfindung wird im Folgenden anhand eines Ausführungsbeispiels in den Zeichnungen beschriebne, in denen:

Fig. 1 eine schematische Prinzipdarstellung eines herkömmlichen Fingerabdruckaufnahmegerätes zeigt;

Fig. 2 eine schematische Prinzipdarstellung eines erfindungsgemäßen Fingerabdruckaufnahmegerätes zeigt;

Fig. 3 schematisch eine Fingerabdruckaufnahme eines Fingers mit Überzug zeigt, wobei die sich im Fingerabdruckbild zeigenden Leisten und Täler des Überzugs und die sich in den Spektren zeigenden Leisten und Täler des hinter dem Überzug liegenden Fingers schematisch angedeutet sind;

Fig. 4 eine Darstellung zur Erläuterung der Erkennung von Folienüberzügen über einem "lebenden" Finger ist;

Fig. 5 das Absorptionsvermögen unterschiedlicher echter Finger im Spektralbereich 500 - 850 nm (oben) und 800 - 1.000 nm (unten) zeigt;

Fig. 6 die zweiten Ableitungen der Spektren der Absorptionsvermögen unterschiedlicher echter und lebender Finger im Spektralbereich von 500 - 850 nm (oben) und im Spektralbereich von 800 nm - 1.000 nm (unten) zeigt;

Fig. 7 das Absorptionsvermögen (oben) und die zweiten Ableitungen (unten) für Leichenfinger im Spektralbereich von 500 - 850 nm zeigt;

Fig. 8 die zweiten Ableitungen der Spektren eines abgebundenen Fingers für verschiedene Zeiten des Abbindens zeigt;

Fig. 9 beispielhafte Spektren von "Stempelpolymeren" und einem echten Finger im Spektralbereich von 800 nm - 1.000 nm als Absorptionsvermögen (oben) und als zweite Ableitungen (unten) zeigt;

Fig. 10 typische prozentuale Helligkeitsunterschiede zwischen Leisten und Tälern in Abhängigkeit von der Wellenlänge zeigt;

Fig. 11 ein schematisches Ablaufdiagramm der Auswertung der Fingerabdruckaufnahmen und der Spektralaufnahmen zur Zurückweisung von Falsifikaten zeigt;

Fig. 12 ein schematisches Ablaufdiagramm zur Erkennung von Folienüberzügen mit künstlichen Fingerabdrücken;

Fig. 13 ein Fingerabdruckbild eines Fingerabdrucks mit einem Überzug mit künstlichem Fingerabdruck und die zugehörigen Leisten- und Tälerspektren in zweiter Ableitung sowie das Differenzspektrum daraus zeigt; und

Fig. 14 ein Fingerabdruckbild wie in Fig. 13 eines echten Fingerabdrucks ohne Überzug und die zugehörigen Leisten- und Tälerspektren in zweiter Ableitung sowie das Differenzspektrum daraus zeigt.

Soweit in den Figuren Spektren des Absorptionsvermögens (Absobance) und Spektren mit den zweiten Ableitunges des Absorptionsvermögens gezeigt sind, sind diese in beliebigen Einheiten dargestellt.

Fig. 1 illustriert schematisch den prinzipiellen Aufbau eines herkömmlichen Fingerabdruckaufnahmegerätes. Das Gerät hat einen transparenten Prismen- oder Auflagekörper 2 mit einer ebenen oberen Auflagefläche, auf die ein Finger 1 auflegbar ist. Aus einer Beleuchtungseinheit 3 wird Licht von unten in den Auflagekörper eingestrahlt. Aufgrund der Brechungsindexdifferenzen einerseits zwischen dem Prismenkörper und darauf aufliegenden Hautbereichen und andererseits zwischen Prismenkörper und Luft (in den zwischen benachbarten Hautleisten liegenden Zwischenräumen) kann ein Fingerabdruckbild abgebildet werden. In den Bereichen aufliegender Hautleisten tritt diffuse Streuung auf, wobei diffus gestreutes Licht auf die abgeschrägte verspiegelte Seitenwand 4 des Auflagekörpers 2 fällt und von dort über ein Objektiv 5 auf einen Kamerasensor 6 abgebildet wird. Der Kamerasensor ist ein zweidimensionaler ortsempfindlicher Photosensor, vorzugsweise ein hochauflösender CMOS-Digitalsensor. In dem aufgenommenen FTIR-Fingerabdruckbild erscheinen die Hautleisten hell und die Täler zwischen den Hautleisten dunkel.

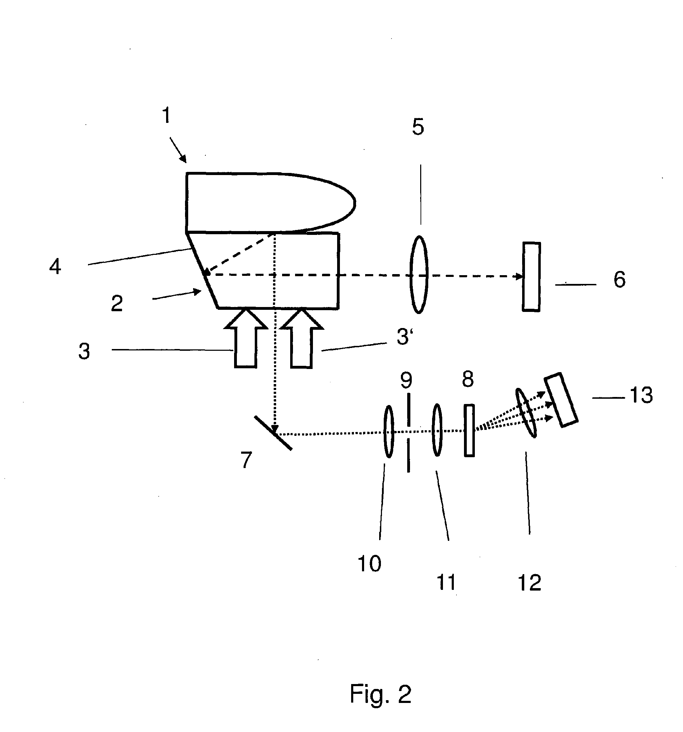

Fig. 2 zeigt schematisch den Aufbau eines erfindungsgemäßen Fingerabdruckaufnahmegeräts mit integrierter ortsaufgelöster Spektrometereinheit. Die Beleuchtungseinheit 3, 3' ist so vorgesehen, dass sie zusätzlich breitbandiges Licht einschließlich des Wellenlängenbereichs von 500nm bis 850nm und 800nm bis 1000nm erzeugt. Das Licht wird ebenfalls durch den Auflagekörper 2 von unten auf den Finger gestrahlt, jedenfalls so, dass kein oder nur ein geringer Anteil von von der Hautoberfläche direkt reflektiertem (spiegelnd reflektiertem) Licht in das Spektrometer gelangt. Durch diffuse Reflexion und Transflexion im Gewebe wird das Licht von dem Finger durch die Auflagefläche und durch den Auflagekörper 2 in Richtung des Spektrometers abgestrahlt. Dabei kann es zum Beispiel durch einen Umlenkspiegel 7 in Richtung des Eingangsobjektives 10 der ortsaufgelösten Spektrometereinheit gelenkt werden. In der Bildebene des Objektives ist die spalt- oder schlitzförmige Blende 9 des Spektrometers angeordnet. Bei dem in Fig. 2 dargestellten Aufbau würde die Blende 9 mit ihrer Längsrichtung senkrecht zur Figurenebene unterhalb des Auflagekörpers liegen. Der von der Blende 9 ausgeblendete Streifen des aus dem Finger austretenden und über ein erstes Objektiv 10 abgebildeten Lichts wird über ein zweites Objektiv 11 auf ein Gitter 8 geworfen. Dieses Gitter ist so aufgebaut und angeordnet, dass die dispersive wellenlängenabhängige Auffächerung des gebeugten Lichts in einer von der Längsrichtung der Blende verschiedenen, vorzugsweise dazu senkrechten, Richtung erfolgt. In der Darstellung von Fig. 2 bedeutet dies, dass die Längsausdehnung der Blende senkrecht zur Figurenebene steht, während die dispersive Auffächerung des Lichts in der Figurenebene erfolgt. Über ein weiteres Objektiv 12 wird das Beugungsbild der Blende dann auf den zweiten Kamerasensor 13 geworfen. Auf der Sensoroberfläche verläuft dann das Beugungsbild der Blende mit der Längsausdehnung der Blende in einer ersten Richtung (in dem dargestellten Beispiel senkrecht zur Figurenebene) und mit der dispersiven Auffächerung des Beugungsbildes in einer zweiten, hier zur ersten senkrechten Richtung (in der Figurenebene). Bei dem Kamerasensor 13 handelt es sich vorzugsweise um einen zweidimensionalen CMOS-Digitalkamerasensor. Dieser ermöglicht es, mit einer einzigen Bildaufnahme gleichzeitig bis zu 2000 Spektren (ein Spektrum pro Zeile) mit einer Datentiefe bis zu 12 Bit aufzunehmen. Jedes der Spektren entspricht damit dem Spektrum eines Bildelementes entlang der Blende, d.h. man kann sich die schlitzförmige Blende in 2000 Bildelemente unterteilt denken, wobei das Licht jedes dieser Bildelemente durch das Gitter dann auf eine Zeile des Kamerasensors abgebildet wird. Der Kamerasensor kann die Bildaufnahme in etwa 20 Millisekunden durchführen.

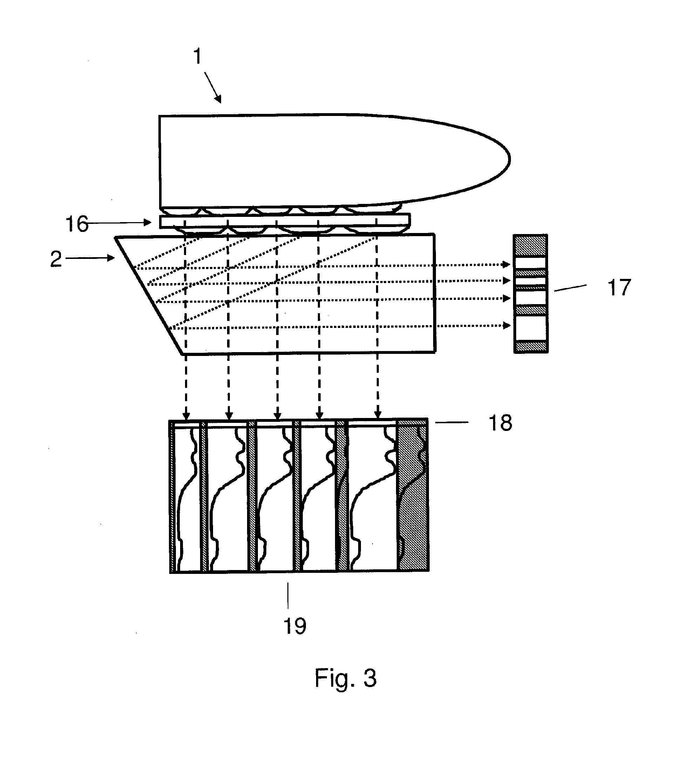

Fig. 3 zeigt eine schematische Darstellung eines Ausführungsbeispiels, bei dem ein Finger 1 mit Überzug 16 mit gefälschtem Fingerabdruck auf die Auflagefläche aufgelegt ist. Dabei kann der Finger 1 einen echten lebenden Finger, einen Leichenfinger oder einen künstlichen Finger (Stempelpolymer) darstellen. Zwischen dem Finger 1 und der Auflagefläche des Glaskörpers befindet sich eine dünne Folie als Überzug 16 mit dem gefälschten Fingerabdruck. Diese Folie kann wiederum transparent, nicht transparent, farbig oder milchig sein. Weiterhin kann sie wasserhaltig oder nicht sein und die Folie wird mit einer sehr hohen Wahrscheinlichkeit organisch-chemische Substanzen enthalten, die zum einen ein Infrarotabsorptionsspektrum generieren, zum anderen nicht in den vergleichbaren Konzentrationen im Finger vorkommen. Der der Blende entsprechende Ausschnitt des Fingerabdruckbildes ist in Detail 17 dargestellt. In dem Fall, dass 16 einen transparenten Überzug darstellt, sind in dem Fingerabdruckbild die gefälschten Leisten des Überzugs 16 sichtbar. Die Spektrometereinheit ist hingegen nur für die hinter dem Überzug 16 liegenden Leisten und Täler des Fingers 1 sensitiv, die durch die unterschiedliche Gewebe und Durchblutungszusammensetzungen in Leisten und Tälern auch ein Kontrastrelief auf der Schnittebene erzeugen. Da nicht nur ein Intensitätswert 18 zu jedem Ortspunkt entlang der Blende existiert, sondern ein volles VIS-NIR Spektrum 19, kann zu jedem Ortspunkt zusätzlich die Analyse des hinter dem Überzug liegenden Fingers 1 durchgeführt werden.

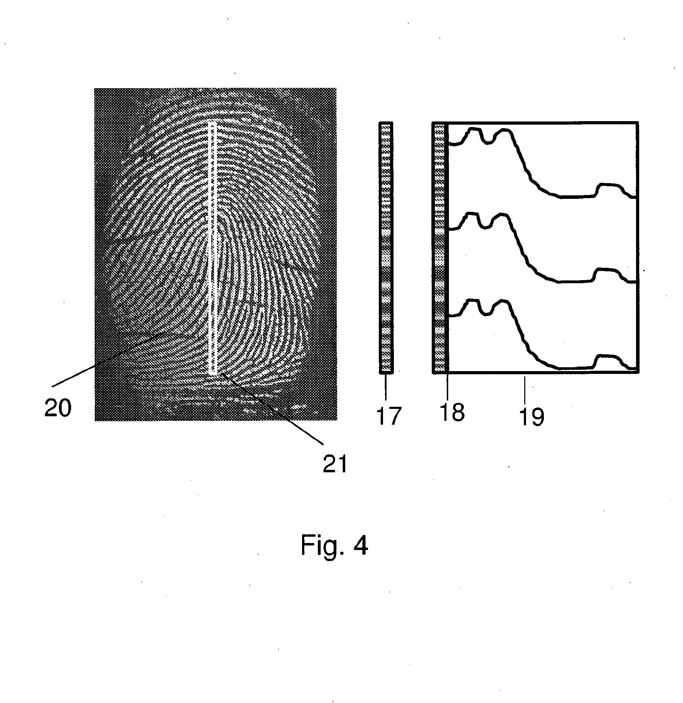

In Fig. 4 ist als Beispiel ein reales 500 ppi FTIR-Fingerabdruckbild 20 eines Fingerabdruckscanners dargestellt. Nach der örtlichen Kalibration der Fingerabdruckaufnahmeeinheit mit der ortsaufgelösten Spektrometereinheit, d.h. die Lage des streifenförmigen Bereichs 21 wird zu der Lage der Blende in Beziehung gesetzt, so dass der streifenförmige Bereich 21 des Fingerabdruckbildes von demselben Fingeroberflächengebiet stammt wie das durch die Blende 9 hindurch in die Spektrometereinheit eintretende Licht. Auf diese Weise kann der streifenförmiger Bereich 21 des Fingers mit den beiden optischen Einheiten aufgenommen werden, nämlich einmal als Streifen 21 aus dem FTIR-Fingerabdruckbild, dessen Intensitätsverteilung mit 17 bezeichnet ist, und zum anderen als Intensitätsverteilung 18 der entlang der Blende ortsaufgelösten Spektrometeraufnahme. Da in 18 zu jedem Ortspunkt ein volles VIS-NIR Spektrum existiert, kann hier optimiert eine Leistenauswertung nach den physiologischen Eigenschaften der Leisten durchgeführt werden. Bei einem echten lebenden Finger ist davon auszugehen, dass die Auswertungen und Analysen ein identisches Ergebnis liefern, d.h. insbesondere das Muster von Leisten und Tälern übereinstimmt. Bei einem unterliegenden transparenten Überzug ("Folienüberzug") 16 ist davon auszugehen, dass es abweichende Ergebnisse gibt.

In den folgenden Abbildungen soll erläutert werden, wie die unterschiedlichen spektroskopischen VIS-NIR Auswertungen ermöglicht werden.

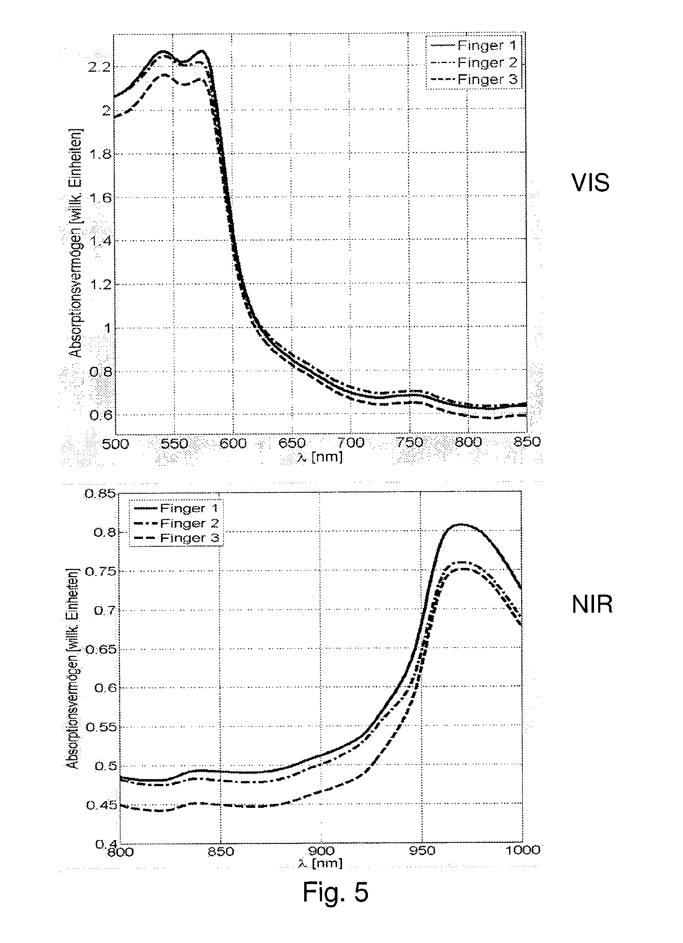

In Fig. 5 sind drei typische Spektren von Fingern als Absorptionsvermögen in den beiden zu untersuchenden Spektralbereichen dargestellt. Dabei dient der oben dargestellte erste Spektralbereich von 500 nm bis 850 nm hauptsächlich der physiologischen Auswertung der Hämoglobinderivate und der Erkennung von abweichenden sichtbaren Pigmenten (Farben) optionaler Fälschungen, während die untere Darstellung im Spektralbereich 800 nm bis 1000 nm der Auswertung von optionalen organischchemischen Substanzen und des Wassergehaltes des aufliegenden "Fingers" 1 dient.

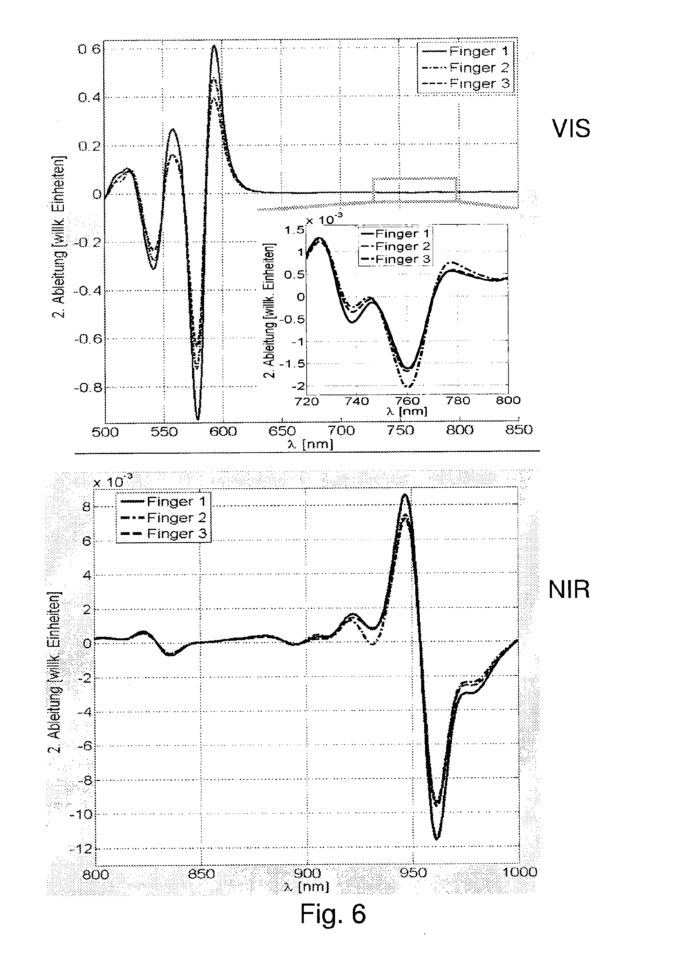

In Fig. 6 sind die gleichen Spektren wie in Fig. 5 dargestellt, wobei hier die zweite Ableitung der Kurven des Absorptionsvermögens dargestellt sind. Die zweite Ableitung stellt die Steigungsänderungen der Spektren dar. Daraus folgt, dass diese Kurven unabhängig von konstanten oder linearen Absorptionseigenschaften sind. Somit sind die Kurven weitestgehend unabhängig von Geräteschwankungen und Streueigenschaften des Gewebes. Die signifikanten chemisch bedingten Absorptionsbanden bleiben allerdings in den zweiten Ableitungen transformiert erhalten, so dass die chemischen Eigenschaften sehr viel signifikanter in den spektroskopischen Daten zu erkennen und auszuwerten sind.

In Fig. 6 oben im Spektralbereich 500 nm bis 850 nm ist sehr deutlich die Doppelbande bei 578 nm und 546 nm zu erkennen, die auf das oxigenierte Hämoglobin (HbO2) im Finger zurückzuführen ist. Die intensitätsmäßig schwächere Bande bei 760 nm wird durch das deoxignierte Hämoglobin (HHb) hervorgerufen. Das Spektrum im Bereich 800 nm bis 1000 nm wird bei einem echten Finger durch das Wasser dominiert. Dabei sind in diesem Spektralbereich zwei Kombinationsbanden des Wassers bei 830 nm und bei 960 nm erkennbar. Weiterhin wird das Spektrum vom Fettanteil (930 nm Bande) und weiteren organischen Stoffen beeinflusst, welche in geringeren variablen Konzentrationen im Finger enthalten sind.

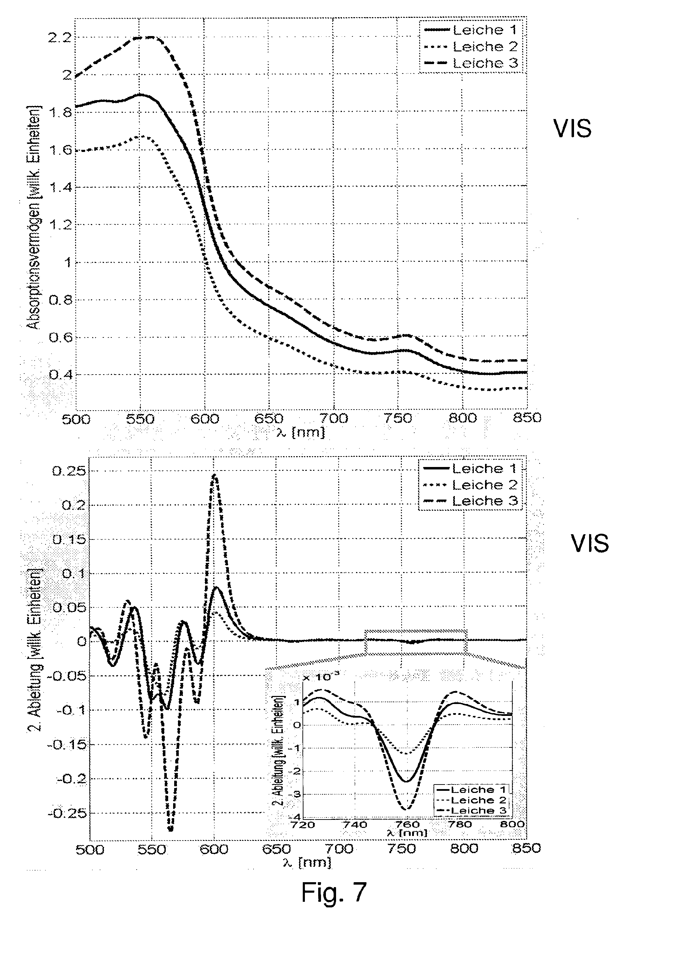

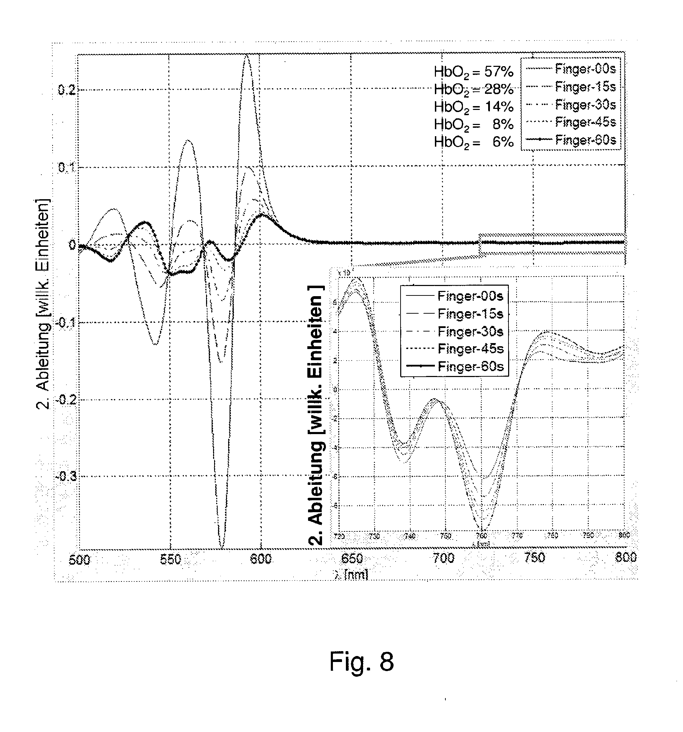

In Fig. 7 sind die Fingerspektren von Leichenfingern als Absorptionsvermögen und dessen zweite Ableitungen dargestellt. Es ist deutlich zu erkennen, dass die spektralen Eigenschaften der Finger sich signifikant von lebenden Fingern unterscheiden. Die Spektren der Leichen sind durch die fehlende Oxigenierung des Blutes vom reduzierten Hämoglobin (HHb) bestimmt. Ein anschauliches Beispiel für die Deoxigenierung eines Fingers ist in Fig. 8 dargestellt. Dabei wurde ein Finger durch ein Gummiband für einen kurzen Zeitraum von der Durchblutung abgeschnitten und es wurden Oxigenierungsgrade vor dem Abschnüren und nach unterschiedlichen Zeitintervallen der Abschnürung bestimmt.

Da die spektralen Extinktionskoeffizienten der Hämoglobinderivate sehr genau wissenschaftlich bestimmt sind (z.B. Zijlstra W., Buursma A., van Assendelft O. (2000). "Visible and near infrared absorption spectra of human and animal hemoglobin", Utrecht: VSP), lässt sich sehr einfach aus dem Spektrum der Oxigenierungsgrad des Hämoglobins im Finger bestimmen. Hieraus lässt sich wiederum ein deutliches Kriterium für einen lebenden Finger ableiten, da arterielles Blut im Allgemeinen einen Oxigenierungsgrad über 90% besitzt und das Mischblut in der Fingerbeere (arteriell + venös + Gewebe) über 50% Oxigenierung haben muss. Üblich sind für einen gesunden, gut durchbluteten Finger höhere Werte.

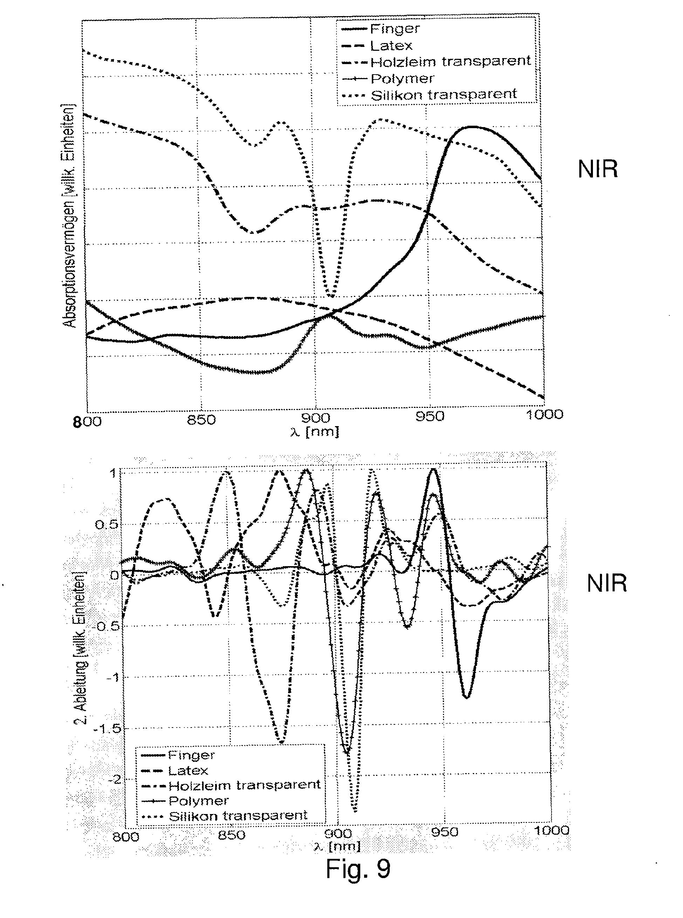

In Fig. 9 sind im Spektralbereich 800 nm bis 1000 nm unterschiedliche "Stempelpolymere" und ein echter Finger im Absorptionsvermögen und der zweiten Ableitung dargestellt. Die "Stempelpolymere" sind durch die charakteristischen Absorptionsbanden der Kunststoffe (organisch-chemisch funktionelle Gruppen) dominiert. Diese unterscheiden sich sehr charakteristisch von denen der in einem echten Finger vorhandenen Substanzen. Das NIR-Spektrum 800 nm bis 1000 nm des echten Fingers wird hierbei durch die Banden des Wassers und vom Fett bestimmt. Weitere Substanzen wie Proteine und Blutzucker (Glucose) spielen durch die niedrigere Konzentration eine untergeordnete Rolle, sind aber in den Toleranzbereich des echten Fingers mit einzubeziehen.

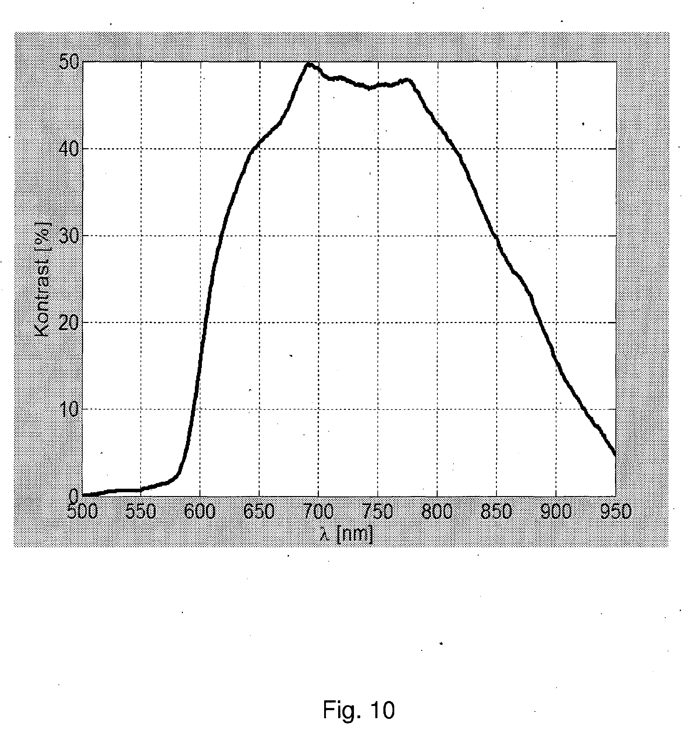

In Fig. 10 ist eine Auswertung gezeigt, die die typischen Helligkeitsunterschiede (Absorptionsvermögen) zwischen Leisten und Tälern in Abhängigkeit von der Wellenlänge darstellt. Hieraus ist ersichtlich, dass die deutlichste Kontrastbildung zwischen Leisten und Tälern im Bereich der niedrigsten Gesamtabsorption zwischen ca. 700nm und 800nm liegt. Dieses kann mit der anteilig erhöhten diffusen Streuung in dem Gewebe der Leisten erklärt werden.

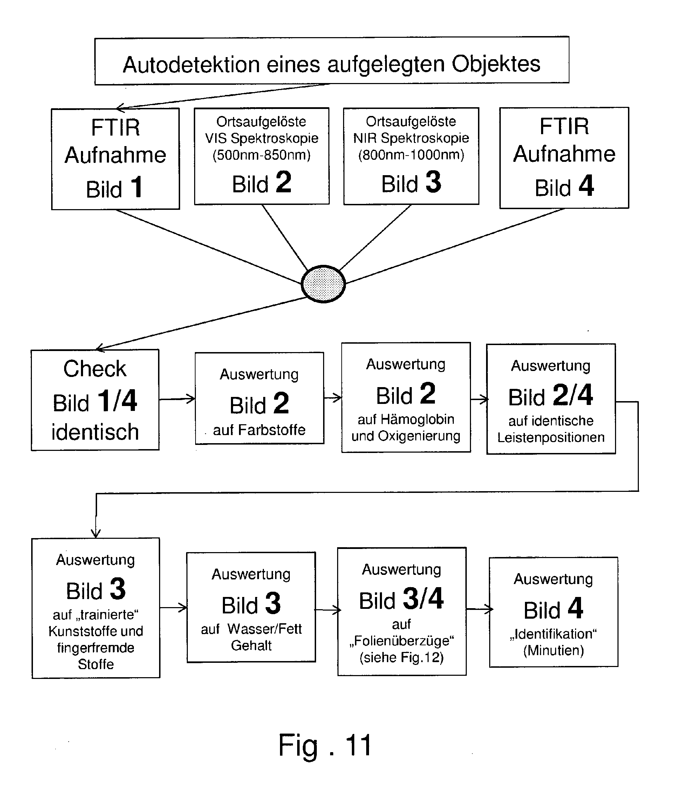

In Fig. 11 ist ein mögliches Auswertungsschema für eine Fälschungserkennung dargestellt. Zu Beginn der Sequenz muss durch einen Detektionsmechanismus erkannt werden, wenn ein Finger stabil auf dem Fingerscanner aufgelegt ist. Typischerweise werden hier Bilder in niedriger Auflösung mit einer hohen Scanrate und einer einfachen Vorauswertung aufgenommen. Nach einer Freigabe werden direkt aufeinanderfolgend vier Bilder erzeugt: Bild 1 ist das aktuelle Fingerabdruckbild mit der FTIR-Technologie. Bild 2 ist das ortsaufgelöste VIS-Spektrum des Fingers aufgenommen mit dem ortsauflösenden Spektrometer, Bild 3 ist das ortsaufgelöste NIR-Spektrum (800 nm - 1000 nm) und Bild 4 ist eine weitere Fingerabdruckaufnahme mit der FTIR-Technologie.

Nach der Aufnahme werden in der Realität einige Vorverarbeitungsschritte durchgeführt. Dazu gehören Entzerrungen, Weißnormierungen, etc., die dem Fachmann aber aus dem Stand der Technik wohlbekannt sind und hier nicht weiter erläutert werden.

Bei der Aufnahme der Spektralbilder 2 und 3 genügt im Allgemeinen die Aufnahme eines einzelnen Bildes. Es soll aber festgehalten werden, dass es auch vorteilhaft sein kann, eine Sequenz von mehreren Bildern aufzunehmen und zusammenzufassen, um das Signal/Rauschverhältnis der Einzelspektren zu verbessern.

Als erstes muss geprüft werden, ob Bild 1 und 4 sich nicht unterscheiden, damit gewährleistet werden kann, dass sich der Finger während der Aufnahmesequenz nicht auf der Auflagefläche verschoben hat. Bei positiver Erkennung, dass sich der Finger nicht bewegt hat, kann in der Auswertungskette fortgefahren werden, bei negativer muss mit einer neuen Aufnahmesequenz begonnen werden.

Als zweiter Auswerteschritt wird das ortsaufgelöste VIS-Spektrum im Absorptionsvermögen und der zweiten Ableitung auf die "Farbe" untersucht. Das menschliche Fingerspektrum setzt sich spektroskopisch gesehen aus den drei Substanzen Melanin, oxigeniertem Hämoglobin (HbO2) und deoxigeniertem Hämoglobin (HHb) zusammen. Die anteilige Zusammensetzung kann allerdings in einem breiten Bereich variieren. Mit einer chemometrischen Auswertung kann erkannt werden, ob weitere, davon abweichende Farbpigmente, in dem Spektrum auftauchen. Bei positiver Bewertung, d.h. es sind keine abweichenden Farbpigmente gefunden worden, kann die nächste Prüfung durchgeführt werden. Bei negativer Bewertung wird der Fingerabdruck zurückgewiesen.

In dem folgenden Schritt wird aus Bild 2 in dem örtlich zusammengefassten VIS-Spektrum in der zweiten Ableitung zum einen eine Schwellwertanalyse des Hämoglobinsignals insgesamt durchgeführt, zum anderen wird mit Hilfe der spektralen Extinktionskoeffizienten aus den Literaturspektren und einer chemometrischen Analyse ein prozentuales Verhältnis der Oxigenierung des Hämoglobins bestimmt. Wie aus Fig. 7 ersichtlich, nimmt die Oxygenierung bei fehlender Zufuhr von arteriellem Blut nach sehr kurzer Zeit stark ab.

Mit diesem Verfahren wird die Erkennung von "Leichenfingern" durchgeführt. Die Erkennungsparameter und das Deoxigenierungsverhalten wurden bereits anhand von Fig. 7 und Fig. 8 beschrieben.

Für den nächsten Auswertungsschritt werden das ortsaufgelöste VIS-Spektrum und das FTIR-Fingerabdruckbild eingesetzt. Da beide optischen Systeme spatial zueinander kalibriert sind, lässt sich aus dem FTIR-Fingerabdruckbild ein streifenförmiger Bereich extrahieren, der örtlich mit dem Fingerbereich übereinstimmt, von dem Licht durch die Blende hindurchtritt, und insofern können örtlichen Punkte streifenförmigen Bereichs 17 aus dem FTIR-Fingerabdruckbild direkt mit den örtlichen Punkten entlang der Spektrometerlinie 18 verglichen werden (siehe Fig. 4).

Wenn nun ein transparenter Folienüberzug 16 auf der Auflagefläche liegt und ein echter Finger 1 mit sich davon unterscheidender Leistenstruktur dahinter, wird es in den Darstellung 17 aus dem FTIR-Fingerabdruckbild und der Darstellung 18 aus dem Spektrometer Unterschiede geben, obwohl beide von demselben streifenförmigen Hautoberflächenbereich stammen. Bei einem echten Finger müssen die örtlichen Leistenpositionen über die gesamte Aufnahmelinie beider Darstellungen übereinstimmen. Zeigen sich hingegen Abweichungen, wird der Fingerabdruck zurückgewiesen.

Der nächste Auswertungsschritt wird anhand von Bild 3, dem zu einem Spektrum zusammengefassten NIR-Spektren, durchgeführt. Dabei werden die Daten anhand des Spektrums des Absorptionsvermögens und der zweiten Ableitung analysiert. Diese Erkennung dient vorwiegend der Erkennung von "Stempelpolymeren" und wenig oder nichttransparenten Überzügen. Hierbei findet eine chemometrische Auswertung auf Abweichungen von "üblichen Fingern" statt und weiterhin wird geprüft, ob typisch eingesetzte Polymere wie Silikon, Holzleim, Accutrans oder ähnliche Materialien direkt durch Vergleich mit deren bekannten spektralen Eigenschaften identifiziert werden können. Es ist auch möglich, dass Proben typischer bekannter Polymere auf die Auflagefläche gelegt und mit dem Spektrometer gemessen und deren Spektren in dem Datenverarbeitungsgerät gespeichert werden, so dass das Gerät die spektralen Signaturen bekannter Fälschungsmaterialien "lernt". Bei Erkennung eines solchen Polymermaterials wird der Fingerabdruck zurückgewiesen.

Im folgenden Schritt werden dieselben Daten aus Bild 3 noch ein weiteres mal ausgewertet. Hierbei werden Sie quantitativ auf die Signale des Wassers (960 nm) und des Fetts (930 nm) analysiert. Beide Substanzen sind die dominanten Absorber in diesem Spektralbereich bei einem lebenden Finger. Auch wenn die Werte im Bevölkerungsquerschnitt einer erheblichen Schwankungsbreite unterliegen, sind sie doch sehr signifikant von anderen technisch realisierbaren Materialien zu unterscheiden. Eine Erkennung ist hier auf Basis einer Schwellwertsetzung und Abweichungsanalyse möglich, wodurch "Fingerabdrücke", die Werte außerhalb vorgegebener Bereiche von Wasser und Fett aufweisen, zurückgewiesen werden können.

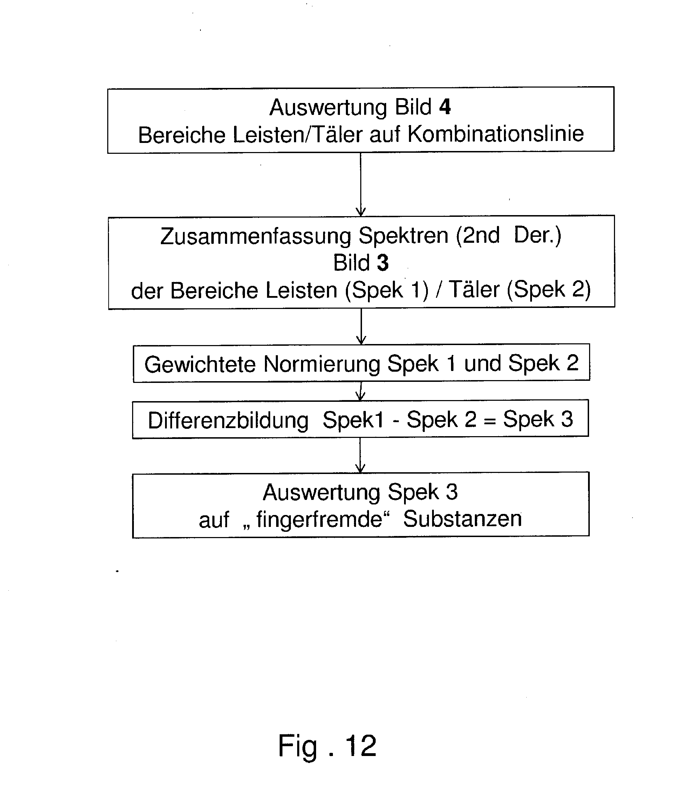

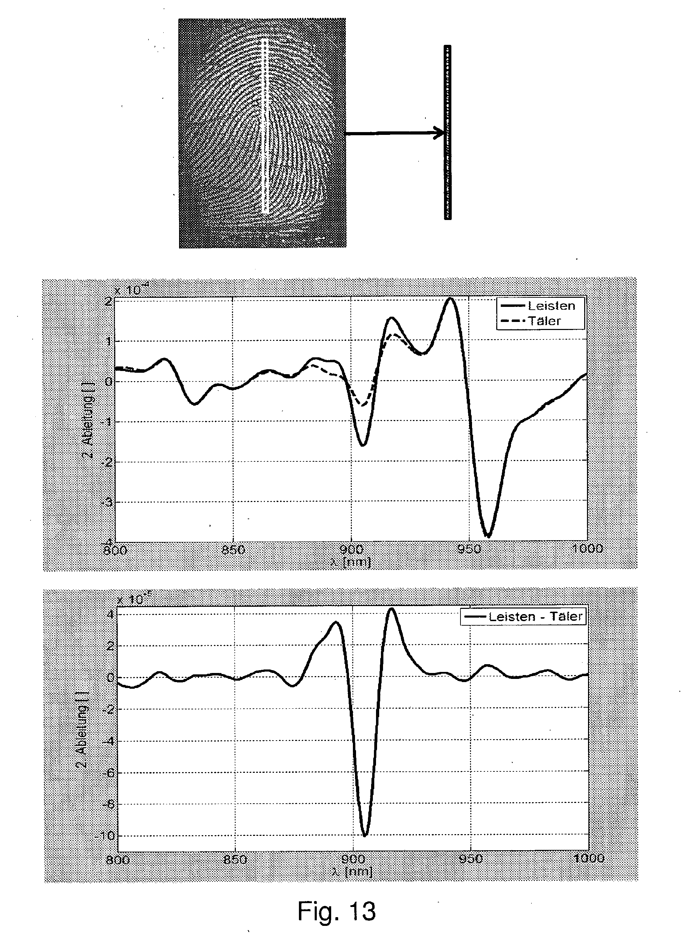

Der nächste und letzte Schritt innerhalb der Sequenz der Echtheitsprüfung ist eine letzte, dafür aber sehr signifikante Prüfung, die gerade durch den in der vorliegenden Anmeldung beschriebenen Aufbau ermöglicht wird. Für die Auswertung werden Bild 3 und Bild 4 als Eingangsdatensatz benötigt. Der Ablauf ist separat in Fig. 12 dargestellt. Ein Beispiel dazu ist in Fig. 13 gezeigt.

Der eigentliche Zweck dieser Analyse ist, dass es ermöglicht wird, eine sehr genaue Materialanalyse des fingerabdruckerzeugenden Materials durchzuführen und dieses unabhängig von einer sehr breiten Varianz von hinterliegenden Fingern.

Ein Fingerabdruck, ob echt oder gefälscht, muss eine Höhenstruktur haben. Da die Materialien weiterhin eine gewisse Flexibilität haben müssen, kann man davon ausgehen, dass eine Tälertiefe von mindestens 200 $\mu$m (vergleichbar mit echten Fingern) vorhanden sein muss, damit ein Fingerabdruckbild erzeugt werden kann. Weiterhin ist davon auszugehen, dass bei Einsatz eines dünnen (folienartigen) Überzugs diese Tiefenstruktur auf der fingerzugewandten inneren Seite nicht vorhanden ist. Somit muss es einen Dickenunterschied des Überzugmaterials im Bereich von Leisten gegenüber Tälern geben. Da die Absorptionsstärke nach dem Beer-Lambertschen Gesetz von der Weglänge abhängt, müssen somit die Signalunterschiede eines künstlichen fingerabdruckerzeugenden Überzugmaterials eindeutig und unabhängig vom Hintergrund zu unterscheiden sein.

Dazu wird in der FTIR-Aufnahme Bild 4 (oder Bild 1) der streifenförmige Ausschnitt untersucht und in folgende drei Bereiche eingeteilt: Leiste, Tal, Übergang (zwischen Leiste und Tal und umgekehrt). Leisten und Täler werden jeweils Ortsdaten zugeordnet (z.B. $x_1^{start}$, $x_1^{ende}$ für Beginn und Ende der ersten Leiste (wenn $x$ die Koordinate in der ersten Richtung entlang des streifenförmigen Bildbereichs ist), $x_2^{start}$, $x_2^{ende}$ für die zweite Leiste, etc., und entsprechenden Koordinatenpaare für Täler).

Jedem Spektrum aus Bild 3 ist ebenfalls eine Ortskoordinate $x$ zugeordnet, die die Lage desjenigen Bildelements entlang der ersten Richtung in der Blende kennzeichnet, von dem das jeweilige Spektrum stammt. Nun werden die Spektren, die nach ihren Ortsdaten in Leisten liegen, d.h. deren x-Koordinaten entlang der Blende in einem der Leistenintervalle [ $x_1^{start}$, $x_1^{ende}$ ], [ $x_2^{start}$, $x_2^{ende}$ ], ..., [ $x_n^{start}$, $x_n^{ende}$ ] aus FTIR-

Fingerabdruckbild liegen, zu einem einzigen mittleren Leistenspektrum (Spek 1 in Fig. 12) zusammengefasst. Entsprechend werden alle Spektren, die nach ihrer Ortskoordinate *x* entlang der Blende in einem der Tälerintervalle aus dem FTIR-Fingerabdruckbild liegen, zu einem einzigen mittleren Tälerspektrum zusammengefasst.

Die beiden Mittelwertspektren werden nun einer Normierung unterzogen, da die Gesamtintensitäten durch unterschiedliche Streueigenschaften variieren können. Das Tälerspektrum und das Leistenspektrum werden also auf das gleiche Integral gebracht.

Nach der Normierung werden die Tälerspektren von den Leistenspektren subtrahiert.

Übrig bleibt bei einem folienartigen Überzug das Materialspektrum des Leistenmaterials. Dieses ist ein reines Substanzspektrum der Substanz, aus der die Leisten aufgebaut sind. Dies kann man sich anschaulich anhand von Fig. 3 klarmachen: Betrachtet man die vertikalen Strahlen, die vom Finger nach unten verlaufen und deren Spektren gebildet werden, so erkennt man, dass sie sich im Mittel nur durch die künstlichen Leisten unten am Folieüberzug 16 unterscheiden, da über alle anderen Strukturen entlang der x-Koordinate (erste Richtung der Blende) vollständig gemittelt wird, da die "echten" Leisten und Täler des Fingers mit den Leisten und Tälern des Folienüberzugs 16 entlang der x-Richtung völlig unkorreliert sind. Diese Leisten zeigen sich also in dem Differenzspektrum, das das Spektrum des Leistenmaterials des Überzugs 16 darstellt.

Da durch die beschriebene Spektroskopie typisch 1500-2000 Spektren aufgenommen werden und diese zu nur 2 relevanten Klassen aufsummiert werden und somit einer sehr hohe Datentiefe gegeben ist, lassen sich auch feinste Unterschiede sehr signifikant erkennen. Sind diese spektralen Unterschiede nun nicht passend zu bekannten Spektren eines möglichen künstlichen Leistenmaterials, kann eine Abweisung des Fingerabdruckes vorgenommen werden.

Ein Beispiel für den beschrieben Prüfablauf anhand eines sehr dünnen transparenten Silikonüberzuges wird mit Bezug auf Fig. 13 beschrieben. Hier ist oben das Fingerabdruckbild mit dem extrahierten streifenförmigen Bereich gezeigt, der dem Fingerbereich Blende entspricht, von dem aus Licht in das Spektrometer einfallen kann. Der streifenförmige Bereich wird in Intervalle in "schwarz", "grau" und "weiß" unterteilt, entsprechen "Täler", "Übergange" und "Leisten". Anhand dieser Intervalle werden die Spektren, denen ja auch jeweils ein Ort *x* entlang der Längsrichtung der Blende zugeordnet ist, in Tälerspektren und Leistenspektren eingeteilt und die Spektren aus Übergängen nicht weiter berücksichtigt. Die Täler- und Leistenspektren werden jeweils zu einem mittleren Spektrum zusammengefasst und auf gleiches Integral normiert, die in Figur 13 in dem oberern der beiden Graphen dargestellt sind. Nach der Differenzbildung verbleibt dann das in Fig. 13 unten dargestellte Spektrum, das ein reines Silikonspektrum des Leistenmaterials des Überzugs ist. Zeigt sich in dem Differenzspektrum irgendein körperfremdes Material anhand einer bekannten spektralen Charakteristik, kann eindeutig auf einen Täuschungsversuch geschlossen werden und der Fingerabdruck zurückgewiesen werden.

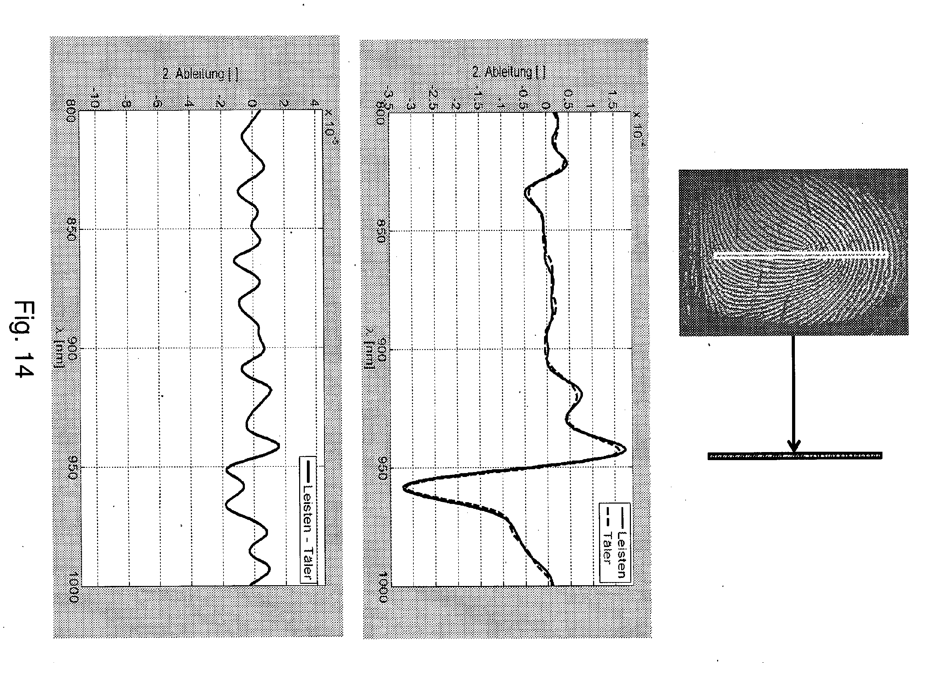

In Fig. 14 ist oben das Fingerabdruckbild eines "echten" Fingers, darunter die normierten Leisten- und Tälerspektren und ganz unten das Differenzspektrum dargestellt. Das Differenzspektrum zeigt keine signifikanten Strukturen oder Signaturen, die auf ein Spektrum eines Fremdmaterials hindeuten könnten. Die Signalvariation ist deutlich kleiner als bei Vorhandensein eines Überzugs und wird eher durch Rauschen bestimmt. Das bedeutet, dass die Spektren des Absorptionsvermögens zwischen Leisten und Tälern zwar Intensitätsunterschiede zeigen, in den zweiten Ableitungen jedoch keine Unterschiede, so dass das Differenzspektrum eines echten Fingers keine signifikanten Strukturen aufweist.

Nach diesem letzten Prüfschritt kann nun, wie in Fig. 11 dargestellt, anhand von Bild 4 eine Auswertung der Minutien erfolgen. Anhand dieser Auswertung kann eine abgesicherte Personenidentifikation vorgenommen werden.

Wenn eine Auswertung in dem sequenziellen Ablauf im Ergebnis als "Fälschung" erkannt wird, wird der sequenzielle Ablauf unterbrochen und die Fingerabdruckauswertung nicht freigegeben. Wie in diesem Falle weiter verfahren wird ist nicht Gegenstand der Anmeldung und kann in unterschiedlichster Form für verschiedene Anwendungen realisiert werden.

## Patentansprüche

**1.** Verfahren zur Aufnahme eines Fingerabdruckes mit Echtheitserkennung, unter Verwendung einer an ein Datenverarbeitungsgerät angeschlossenen Fingerabdruck-Aufnahmeeinheit, die einen Prismenkörper (2) mit einer Auflagefläche, eine Beleuchtungseinheit (3, 3') zur Beleuchtung eines auf die Auflagefläche aufgelegten Fingers (1) und einen ersten Kamerasensor (6) aufweist, die so aufgebaut und angeordnet sind, dass der Kamerasensor ein Fingerabdruckbild entweder nach dem Prinzip der gestörten Totalreflexion (FTIR) oder nach dem Prinzip der Totalreflexion (TIR) aufnehmen kann, **dadurch gekennzeichnet,**
**dass** ein Spektrometer mit einer entlang einer ersten Richtung verlaufenden schlitzförmigen Blende (9) zur Ausblendung eines schlitzförmigen Bereichs des von dem auf der Auflagefläche aufliegenden Finger reflektierten Lichts eine spektrale Auffächerung in einer zweiten, von der ersten Richtung verschiedenen Richtung bewirkt und mit einem zweiten Kamerasensor (13) eine Vielzahl von Spektren entsprechend einer Vielzahl von aufeinanderfolgenden Bildelementen, denen Ortsdaten entlang der ersten Richtung der Blende zugeordnet werden, aufnimmt,

**dass** in einem Bildbereich des aufgenommenen Fingerabdruckbilds des ersten Kamerasensors (6), welcher dem durch die Blende des Spekrometers definierten Bereich entspricht, Hautleisten und dazwischenliegende Täler identifiziert und deren Ortsdaten entlang der ersten Richtung der Blende bestimmt werden,

**dass** aus der Vielzahl von Spektren anhand der Ortsdaten der Leisten und Täler aus dem Fingerabdruckbild diejenigen Spektren, die nach ihren Ortsdaten in im Fingerabdruckbild bestimmten Leisten liegen, zu einem Leistenspektrum zusammengefasst werden, und die Spektren, die nach ihren Ortsdaten im Fingerabdruckbild in Tälern liegen, zu einem Tälerspektrum zusammengefasst werden, das Leistenspektrum und das Tälerspektrum auf gleiche Gesamtintensität normiert und diese voneinander zur Bildung eines Differenzspektrums subtrahiert werden, und

**dass** das Differenzspektrum auf Merkmale für das Vorhandensein von körperfremden Überzugsmaterialien untersucht wird und bei deren Vorhandensein die Echtheit verneint wird.

2. Verfahren nach Anspruch 1, **dadurch gekennzeichnet, dass** das Differenzspektrum auf das Vorhandensein spektroskopischer Merkmale untersucht wird, die für C-H-, O-H-und N-H-Gruppen charakteristisch sind.

3. Verfahren nach einem der vorhergehenden Ansprüche, **dadurch gekennzeichnet, dass** eine Beleuchtung des auf der Auflagefläche aufliegenden Fingers im sichtbaren VIS-Bereich von 500 bis 850 nm vorgenommen und eine Vielzahl von Spektren in diesem Wellenlängenbereich aufgenommen wird.

4. Verfahren nach einem der vorhergehenden Ansprüche, **dadurch gekennzeichnet, dass** eine Beleuchtung des auf der Auflagefläche aufliegenden Fingers im NIR-Bereich von 800 bis 1000 nm vorgenommen und eine Vielzahl von Spektren in diesem Wellenlängenbereich aufgenommen wird.

5. Verfahren nach Anspruch 3, **dadurch gekennzeichnet, dass** die Spektren aus dem VIS-Bereich auf das Vorhandensein vorgegebener Farbstoffe untersucht werden und bei deren Erkennung die Echtheit des Fingerabdrucks verneint wird.

6. Verfahren nach einem der Ansprüche 3 bis 5, **dadurch gekennzeichnet, dass** die Spektren aus dem VIS-Bereich auf das Vorhandensein von Hämoglobin und dessen Grad der Oxygenierung auf vorgegebene Kriterien untersucht werden und bei deren Nichterfüllung die Echtheit des Fingerabdrucks verneint wird.

7. Verfahren nach Anspruch 4, **dadurch gekennzeichnet, dass** die Spektren aus dem NIR-Bereich auf den Anteil von Wasser und Fett hin untersucht werden und die Echtheit des Fingerabdrucks verneint wird, wenn diese außerhalb vorgegebener Bereiche liegen.

8. Verfahren nach einem der vorhergehenden Ansprüche, **dadurch gekennzeichnet, dass** die Spektren in Form ihrer zweiten Ableitung verwendet werden.

9. Verfahren nach einem der Ansprüche 1 bis 7, **dadurch gekennzeichnet, dass** in der Vielzahl von Spektren Hautleisten und Täler identifiziert und deren Ortsdaten enlang der ersten Richtung der Blende bestimmt werden, wonach anhand der Ortsdaten das Muster von Hautleisten und Tälern aus dem Fingerabdruckbild mit dem das Muster von Hautleisten und Tälern entlang der ersten Richtung der Blende verglichen und ein Maß für deren Übereinstimmung bestimmt wird und die Echtheit des Fingerabdrucks verneint wird, wenn das Übereinstimmungsmaß unter einem vorgegebenen Wert liegt.

10. Vorrichtung zur Aufnahme eines Fingerabdruckes mit Echtheitserkennung mit einer an ein Datenverarbeitungsgerät angeschlossenen Fingerabdruck-Aufnahmeeinheit, die einen Prismenkörper (2) mit einer Auflagefläche, eine Beleuchtungseinheit (3, 3') zur Beleuchtung eines auf die Auflagefläche aufgelegten Fingers und einen ersten Kamerasensor (6) aufweist, die so aufgebaut und angeordnet sind, dass der Kamerasensor ein Fingerabdruckbild entweder nach dem Prinzip der gestörten Totalreflexion (FTIR) oder nach dem Prinzip der Totalreflexion (TIR) aufnehmen kann, **dadurch gekennzeichnet, dass**

ein Spektrometer mit einer entlang einer ersten Richtung verlaufenden schlitzförmigen Blende (9) zur Ausblendung eines schlitzförmigen Bereichs des von dem auf der Auflagefläche aufliegenden Finger reflektierten Lichts vorhanden ist, wobei das Spektrometer dazu ausgestaltet ist, eine spektrale Auffächerung in einer zweiten, von der ersten Richtung verschiedenen Richtung zu bewirken und mit einem zweiten Kamerasensor (13) eine Vielzahl von Spektren entsprechend einer Vielzahl von aufeinanderfolgenden Bildelementen entlang der ersten Richtung der Blende aufzunehmen, wobei das Datenverarbeitungsgerät dazu eingerichtet ist, jedem aus der Vielzahl von Spektren Ortsdaten entlang der ersten Richtung der Blende zuzuordnen,

das Datenverarbeitungsgerät dazu eingerichtet ist, in einem Bildbereich des aufgenommenen Fingerabdruckbilds des ersten Kamerasensors , welcher dem durch die Blende des Spektrometers definierten Bereich entspricht, Hautleisten und dazwischenliegende Täler zu identifizieren und deren Ortsdaten entlang der ersten Richtung der Blende zu bestimmen,

das Datenverarbeitungsgerät dazu eingerichtet ist, aus der Vielzahl von Spektren anhand der Ortsdaten der Leisten und Täler aus dem Fingerabdruckbild diejenigen Spektren, die nach ihren Ortsdaten im Bereich von im Fingerabdruckbild bestimmten Leisten liegen, zu einem Leistenspektrum zusammenzufassen, und die Spektren, die nach ihren Ortsdaten im Bereich von im Fingerabdruckbild bestimmten Tälern liegen, zu einem Tälerspektrum zusammenzufassen, das Leistenspektrum und das Tälerspektrum auf gleiche Gesamtintensität zu normieren und diese voneinander zur Bildung eines Differenzspektrums zu subtrahieren, und

das Datenverarbeitungsgerät dazu eingerichtet ist, das Differenzspektrum auf Merkmale für das Vorhandensein von körperfremden Überzugsmaterialien zu untersuchen.

11. Vorrichtung nach Anspruch 10, **dadurch gekennzeichnet, dass** die Beleuchtungseinheit (3, 3') zur Einstrahlung von Licht von unten durch den Prismenkörper (2) zu dem auf der Auflagefläche aufgelegten Finger vorhanden ist, dass das Spektrometer mit seiner Blende (9) von dem Finger im Wesentlich senkrecht zur Auflagefläche nach unten reflektiertes Licht aufnimmt, und dass das Spektrometer ein Blaze-Gitter (8) aufweist, das so aufgebaut und angeordnet ist, dass die dispersive Auffächerung des durch die Blende hindurchtretenden Lichts in einer von der Längsrichtung der Blende verschiedenen Richtung erfolgt, wobei der zweite Kamerasensor (13) so aufgebaut und angeordnet ist, dass er ein Beugungsbild des Gitters mit der ersten Richtung der Blende und der dispersiven spektralen Auffächerung des Lichtes in einer von der ersten verschiedenen zweiten Richtung auf seiner Kamerasensorfläche aufnimmt, wobei der zweite Kamerasensor mit dem Datenverarbeitungsgerät verbunden ist, das weiter dazu eingerichtet ist, die von dem zweiten Kamerasensor (13) empfangenen Signale als eine Vielzahl von Spektren entsprechend einer Vielzahl von Bildelementen entlang der Längsrichtung der Blende aufzunehmen und diesen jeweils Ortsdaten in der ersten Richtung entlang der Blende zuzuordnen.

12. Vorrichtung nach Anspruch 10 oder 11, **dadurch gekennzeichnet, dass** die Blende (9) des Spektrometers unterhalb des Prismenkörpers an dessen der Auflageflächen gegenüberliegenden Seite angeordnet ist und die Beleuchtungseinheit (3, 3') zur Aufnahme der Spektren Licht von unten, im Wesentlichen senkrecht zur Auflagefläche in den Prismenkörper einstrahlt und die Blende von dem aufgelegten Finger im Wesentlichen senkrecht nach unten reflektiertes Licht in einem streifenförmigen Bereich ausblendet, der bei Auflage des aufgelegten Finger in der vorgesehenen Auflagestellung in Längsrichtung des Fingers verläuft.

**Claims**

1. A method for recording a fingerprint, with authenticity identification, using a fingerprint recording device which is connected to a data processing device and has a prism body (2) with a contact face, an illumination unit (3, 3') for illuminating a finger (1) disposed on the contact face and a first camera sensor (6), which are configured and arranged such that the camera sensor can record a fingerprint image either according to the principle of frustrated total internal reflection (FTIR) or according to the principle of total internal reflection (TIR), **characterized in that**
a spectrometer with a slit-shaped aperture (9) running along a first direction for cutting out a slit-shaped region of the light reflected by the finger disposed on the contact face, brings about spectral spread in a second direction which differs from the first direction and, with a second camera sensor (13), records a multiplicity of spectra corresponding to a multiplicity of successive pixels, to which spectra spatial data along the first direction of the aperture is assigned, in an image region of the recorded fingerprint image of the first camera sensor (6), which region corresponds to the region defined by the aperture of the spectrometer, epidermal ridges and troughs situated therebetween are identified and the spatial data thereof is determined along the first direction of the aperture,
the spatial data relating to the ridges and troughs in the fingerprint image is used to combine those spectra from the multiplicity of spectra which, according to the spatial data thereof, are situated in ridges determined in the fingerprint image so as to form a ridge spectrum and to combine the spectra from the multiplicity of spectra which, according to the spatial data thereof, are situated in the troughs are combined to a trough spectrum, the ridge spectrum and the trough spectrum are normalized to the same overall intensity and these are subtracted from one another in order to form a difference spectrum, and
the difference spectrum is examined for features indicating the presence of covering materials foreign to the body and the authenticity is rejected if these are present.

2. The method as claimed in claim 1, **characterized in that** the difference spectrum is examined for the presence of spectroscopic features which are characteristic for C-H-, O-H- and N-H-groups.

3. The method as claimed in one of the preceding claims, **characterized in that** the finger disposed on the contact face is illuminated in the visible VIS range between 500 and 850 nm and a multiplicity of spectra are recorded in this wavelength range.

4. The method as claimed in one of the preceding claims, **characterized in that** the finger disposed on the contact face is illuminated in the NIR range between 800 and 1000 nm and a multiplicity of spectra are recorded in this wavelength range.

5. The method as claimed in claim 3, **characterized in that** the spectra from the VIS range are examined for the presence of predetermined dyes and, should these be identified, the authenticity of the fingerprint is rejected.

6. The method as claimed in one of claims 3 to 5, **characterized in that** the spectra from the VIS range are examined for the presence of hemoglobin and the degree of oxygenation thereof is examined in respect of predetermined criteria and, if these are not satisfied, the authenticity of the fingerprint is rejected.

7. The method as claimed in claim 4, **characterized in that** the spectra from the NIR range are examined in respect of the water and fat contents and the authenticity of the fingerprint is rejected if these are situated outside of predetermined ranges.

8. The method as claimed in one of the preceding claims, **characterized in that** the spectra are used in the form of their second derivative.

9. The method as claimed in one of claims 1 to 7, **characterized in that** epidermal ridges and troughs are identified in the multiplicity of spectra and the spatial data thereof is determined along the first direction of the aperture, after which based on the spatial data the pattern of epidermal ridges and troughs from the fingerprint image are compared to this pattern of epidermal ridges and troughs along the first direction of the aperture and a measure for the correspondence thereof is determined and the authenticity of the fingerprint is rejected if the degree of correspondence lies below a predetermined value.

10. A device for recording a fingerprint, with authenticity identification, having a fingerprint recording device, which is connected to a data processing device and has a prism body (2) with a contact face, an illumination unit (3, 3') for illuminating a finger disposed on the contact face and a first camera sensor (6), which are configured and arranged such that the camera sensor can record a fingerprint image either according to the principle of frustrated total internal reflection (FTIR) or according to the principle of total internal reflection (TIR), **characterized in that** a spectrometer with a slit-shaped aperture (9) running along a first direction for cutting out a slit-shaped region of the light reflected by the finger disposed on the contact face is present, wherein the spectrometer is designed to bring about spectral spread in a second direction which differs from the first direction and, with a second camera sensor (13), to record a multiplicity of spectra corresponding to a multiplicity of successive pixels along the first direction of the aperture, wherein the data processing device is arranged to assign spatial data along the first direction of the aperture to each of the multiplicity of spectra, the data processing device is arranged to identify, in an image region of the recorded fingerprint image of the first camera sensor, which image region corresponds to the region defined by the aperture of the spectrometer, epidermal ridges and troughs situated therebetween and to determine the spatial data thereof along the first direction of the aperture,
the data processing device is arranged, using the spatial data relating to the ridges and troughs in the fingerprint image, to combine those spectra from the multiplicity of spectra which, according to the spatial data thereof, are situated in the region of ridges determined in the fingerprint image so as to form a ridge spectrum and to combine the spectra from the multiplicity of spectra which, according to the spatial data thereof, are situated in the region of the troughs determined in the fingerprint image so as to form a trough spectrum, to normalize the ridge spectrum and the trough spectrum to the same overall intensity and to subtract these from one another in order to form a difference spectrum, and
the data processing device is arranged to examine the difference spectrum for features indicating the presence of covering materials foreign to the body.

11. The device as claimed in claim 10, **characterized in that** the illumination unit (3, 3') for radiating light through the prism body (2) from below and onto the finger disposed on the contact face is present, wherein the spectrometer with the aperture (9) thereof records light which was reflected downward from the finger and substantially perpendicularly to the contact face, and wherein the spectrometer has a blazed grating (8), which is configured and arranged such that the dispersive spread of the light passing through the aperture takes place in a direction that differs from the longitudinal direction of the aperture, wherein the second camera sensor (13) is configured and arranged such that it records on its camera sensor surface a diffraction image of the grating along the first direction of the aperture and the dispersive spectral spread of the light in a second direction that differs from the first, wherein the second camera sensor is connected to the data processing instrument, which is furthermore designed to record the signals received by the second camera sensor (13) as a multiplicity of spectra corresponding to a multiplicity of pixels along the longitudinal direction of the aperture and to respectively assign these spatial data in the first direction along the aperture.

**12.** The device as claimed in claim 10 or 11, **characterized in that** the aperture (9) of the spectrometer is arranged below the prism body on the side thereof lying opposite to the contact face and the illumination unit (3, 3'), for the purposes of recording the spectra, radiates light into the prism body from below, substantially perpendicular to the contact face, and the aperture cuts out light in a strip-shaped region reflected substantially vertically downward from the resting finger, which strip-shaped region runs in the longitudinal direction of the finger when the resting finger is disposed in the placement position provided.

**Revendications**

**1.** Procédé de saisie d'une empreinte digitale avec détection d'authenticité qui utilise une unité de saisie d'empreinte digitale, branché sur un appareil de traitement de données, qui présente un corps de prisme (2) avec une surface d'appui, une unité d'éclairage (3, 3') pour l'éclairage d'un doigt (1) posé sur la surface d'appui et un premier capteur de caméra (6) qui sont construits et placés de telle manière que le capteur de la caméra peut enregistrer une empreinte digitale soit selon le principe de la réflexion totale frustrée (FTIR), soit selon le principe de la réflexion totale (TIR), **caractérisé en ce qu'**un spectromètre avec un diaphragme en forme de fente (9) le long d'une première direction pour supprimer une zone en forme de fente de la lumière réfléchie par le doigt posé sur la surface d'appui provoque une répartition spectrale dans une seconde direction différente de la première direction et enregistre, avec un second capteur de la caméra (13) une multitude de spectres correspondant à une multitude d'éléments d'image successifs auxquels des données de lieu sont associées le long de la première direction du diaphragme, que des lignes papillaires et des creux situés entre celles-ci sont identifiés dans une zone d'image de l'empreinte digitale du premier capteur de caméra (6) qui correspond à la zone définie par le diaphragme du spectromètre et que leurs données de lieu sont déterminées le long de la première direction du diaphragme,
que, parmi la multitude de spectres obtenus à l'aide des données de lieu des lignes papillaires et des creux de l'empreinte digitale, les spectres qui se situent selon leurs données de lieu dans des lignes papillaires déterminées dans l'empreinte digitale sont regroupés en un spectre de lignes papillaires, que les spectres qui se situent selon leurs données de lieu dans l'empreinte digitale dans des creux sont regroupés en un spectre de creux, que le spectre de lignes papillaires et le spectre de creux sont normalisés sur la même intensité globale et ceux-ci sont soustraits l'un de l'autre pour former un spectre de différence et que le spectre de différence est analysé quant aux caractéristiques pour l'existence de matières de revêtement étrangères au corps et qu'en cas d'existence de ceux-ci l'authenticité est rejetée.

**2.** Procédé selon la revendication 1, **caractérisé en ce que** le spectre de différence est analysé quant à l'existence de caractéristiques spectroscopiques qui sont caractéristiques des groupes C-H, O-H et N-H.

**3.** Procédé selon l'une des revendications précédentes, **caractérisé en ce qu'**un éclairage du doigt qui repose sur la surface d'appui est effectué dans la région VIS visible de 500 à 850 nm et qu'une multitude de spectres est enregistrée dans cette plage de longueurs d'onde.

**4.** Procédé selon l'une des revendications précédentes, **caractérisé en ce qu'**un éclairage du doigt qui repose sur la surface d'appui est effectué dans la région NIR de 800 à 1000 nm et qu'une multitude de spectres est enregistrée dans cette plage de longueurs d'onde.

**5.** Procédé selon la revendication 3, **caractérisé en ce que** les spectres dans la région VIS sont analysés quant à l'existence de colorants prédéfinis et en cas de reconnaissance de ceux-ci l'authenticité de l'empreinte digitale est rejetée.

**6.** Procédé selon l'une des revendications 3 à 5, **caractérisé en ce que** les spectres dans la région VIS sont analysés quant à certains critères prédéfinis quant à l'existence d'hémoglobine et de son degré d'oxygénation et qu'en cas de non-respect de ceux-ci l'authenticité de l'empreinte digitale est rejetée.

**7.** Procédé selon la revendication 4, **caractérisé en ce que** les spectres de la région NIR sont analysés quant à la proportion d'eau et de graisse et que l'authenticité de l'empreinte digitale est rejetée si celles-ci se situent en dehors de plages prédéfinies.

**8.** Procédé selon l'une des revendications précédentes, **caractérisé en ce que** les spectres sont utilisés sous forme de leur dérivée seconde.

**9.** Procédé selon l'une des revendications 1 à 7, **caractérisé en ce que** des lignes papillaires et des creux sont identifiés dans la multitude de spectres et que leurs données de lieu sont déterminées le long de la première direction du diaphragme, ce après quoi le motif des lignes papillaires et des creux de l'empreinte digitale du doigt est comparé à l'aide des données de lieu au motif des lignes papillaires et des creux le long de la première direction du diaphragme et qu'une valeur est déterminée pour leur concordance et que l'authenticité de l'empreinte digitale est rejetée si la valeur de concordance se situe en dessous d'une valeur prédéfinie.

10. Dispositif pour enregistrer une empreinte digitale avec reconnaissance de l'authenticité avec une unité de saisie d'empreinte digitale branchée sur un appareil de traitement de données, qui présente un corps de prisme (2) avec une surface d'appui, une unité d'éclairage (3, 3') pour l'éclairage d'un doigt (1) posé sur la surface d'appui et un premier capteur de caméra (6) qui sont construits et placés de telle manière que le capteur de caméra peut enregistrer une empreinte digitale soit selon le principe de la réflexion totale frustrée (FTIR), soit selon le principe de la réflexion totale (TIR), **caractérisé en ce qu'**il existe un spectromètre avec un diaphragme en forme de fente (9) le long d'une première direction pour supprimer une zone en forme de fente de la lumière réfléchie par le doigt posé sur la surface d'appui, le spectromètre étant configuré pour provoquer une répartition spectrale dans une seconde direction différente de la première direction et pour enregistrer, avec un second capteur de caméra (13), une multitude de spectres correspondant à une multitude d'éléments d'image successifs le long de la première direction du diaphragme, l'appareil de traitement des données étant agencé pour associer des données de lieu le long de la première direction à chaque spectre de la multitude de spectres,
que l'appareil de traitement des données est agencé pour identifier des lignes papillaires et des creux situées entre celles-ci dans une zone d'image de l'empreinte digitale enregistrée du premier capteur de caméra qui correspond à la zone définie par le diaphragme du spectromètre et pour déterminer leurs données de lieu le long de la première direction du diaphragme,
que l'appareil de traitement des données est agencé pour regrouper les spectres de la multitude de spectres à l'aide des données de lieu des lignes papillaires et des creux de l'empreinte digitale qui se situent, d'après leurs données de lieu, dans la région de lignes papillaires déterminées dans l'empreinte digitale en un spectre de lignes papillaires et de regrouper les spectres qui se situent, d'après leurs données de lieu, dans la région de creux déterminés dans l'empreinte digitale en un spectre de creux et pour normaliser le spectre de lignes papillaires et le spectre de creux à la même intensité globale et de soustraire ceux-ci l'un de l'autre pour former un spectre de différence et
que l'appareil de traitement des données est agencé pour analyser le spectre de différence quant à des caractéristiques pour l'existence de matières de revêtement étrangères au corps.

11. Dispositif selon la revendication 10, **caractérisé en ce qu'**il existe l'unité d'éclairage (3, 3') pour irradier de la lumière par le bas à travers le corps de prisme (2) vers le doigt posé sur la surface d'appui, que le spectromètre reçoit avec son diaphragme (9) de la lumière réfléchie vers le bas par le doigt substantiellement perpendiculairement à la surface d'appui et que le spectromètre présente une grille de diffraction (8) qui est agencée et placée de telle manière que la répartition dispersive de la lumière qui traverse le diaphragme se fait dans une direction différente du sens longitudinal du diaphragme, cependant que le second capteur de la caméra (13) est agencé et placé de telle manière qu'il enregistre sur sa surface de capteur de caméra une image de diffraction de la grille avec la première direction du diaphragme et la répartition spectrale dispersive de la lumière dans une seconde direction différente de la première, le second capteur de caméra étant relié à l'appareil de traitement des données qui est de plus agencé de manière à enregistrer les signaux reçus par le second capteur de caméra (13) comme une multitude de spectres correspondant à une multitude d'éléments d'image le long du sens longitudinal du diaphragme et à associer ceux-ci respectivement à des données de lieu dans la première direction le long du diaphragme.

12. Dispositif selon la revendication 10 ou 11, **caractérisé en ce que** le diaphragme (9) du spectromètre est placé en dessous du corps de prisme sur son côté opposé à la surface d'appui et que l'unité d'éclairage (3, 3'), pour enregistrer les spectres irradie de la lumière dans le corps de prisme à partir du bas substantiellement perpendiculairement à la surface d'appui et que le diaphragme élimine de la lumière réfléchie substantiellement perpendiculairement vers le bas par le doigt posé dans une zone en forme de bande qui, lors de l'appui du doigt posé, se trouve dans la position d'appui prévue dans le sens longitudinal du doigt.

Fig. 1

Fig. 2

Fig. 3

**Fig. 4**

VIS

NIR

Fig. 5

Fig. 6

Fig. 7

Fig. 8

Fig. 9

Fig. 10

Autodetektion eines aufgelegten Objektes

| FTIR Aufnahme Bild **1** | Ortsaufgelöste VIS Spektroskopie (500nm-850nm) Bild **2** | Ortsaufgelöste NIR Spektroskopie (800nm-1000nm) Bild **3** | FTIR Aufnahme Bild **4** |
|---|---|---|---|

| Check Bild **1/4** identisch | Auswertung Bild **2** auf Farbstoffe | Auswertung Bild **2** auf Hämoglobin und Oxigenierung | Auswertung Bild **2/4** auf identische Leistenpositionen |
|---|---|---|---|

| Auswertung Bild **3** auf „trainierte" Kunststoffe und fingerfremde Stoffe | Auswertung Bild **3** auf Wasser/Fett Gehalt | Auswertung Bild **3/4** auf „Folienüberzüge" (siehe Fig.12) | Auswertung Bild **4** „Identifikation" (Minutien) |
|---|---|---|---|

Fig . 11

```
┌─────────────────────────────────────────────────────┐
│                 Auswertung Bild 4                    │
│     Bereiche Leisten/Täler auf Kombinationslinie     │
└─────────────────────────────────────────────────────┘
                          │
                          ↓
┌─────────────────────────────────────────────────────┐
│          Zusammenfassung Spektren (2nd  Der.)        │
│                      Bild 3                           │
│   der Bereiche Leisten (Spek 1) / Täler (Spek 2)     │
└─────────────────────────────────────────────────────┘
                          │
                          ↓
┌─────────────────────────────────────────────────────┐
│       Gewichtete Normierung Spek 1 und Spek 2        │
└─────────────────────────────────────────────────────┘
                          │
                          ↓
┌─────────────────────────────────────────────────────┐
│       Differenzbildung  Spek1 - Spek 2 = Spek 3      │
└─────────────────────────────────────────────────────┘
                          │
                          ↓
┌─────────────────────────────────────────────────────┐
│                 Auswertung Spek 3                     │
│           auf „fingerfremde" Substanzen              │
└─────────────────────────────────────────────────────┘
```

Fig . 12

Fig. 13

Fig. 14

**EP 2 562 682 B1**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 2120182 A
- US 20110163163 A1
- EP 1498837 A1
- EP 2120182 A1

**In der Beschreibung aufgeführte Nicht-Patentliteratur**

- **MARCELA ESPINOZA ; CHRISTOPHER CHAMPOD.** Risk Evaluation of Spoofing against a Sensor Supplied with Liveness Detection. *Forensic Science International,* 2011, vol. 204, 162-168
- **SAMUAL C. BARDEN et al.** Volume-phase holographic gratings and the effiency of three simple volume-phase holographic gratings. Astronomical Society of the Pacific, Juni 2000, vol. 112, 809-820
- **ZIJLSTRA W. ; BUURSMA A. ; VAN ASSENDELFT O.** *Visible and near infrared absorption spectra of human and animal hemoglobin,* 2000